# EUROPEAN PATENT SPECIFICATION

(11) **EP 4 297 232 B1**
(45) Date of publication and mention of the grant of the patent: **03.09.2025**
(21) Application number: 21927275.4
(22) Date of filing: 26.02.2021
(51) Int. Cl.: H02J 7/00, H02J 3/32, H02J 7/35, H02J 3/38

(54) **ENERGY SYSTEM, AND CHARGING AND DISCHARGING CONTROL METHOD**
ENERGIESYSTEM UND LADE- UND ENTLADESTEUERUNGSVERFAHREN
SYSTÈME D'ÉNERGIE, ET PROCÉDÉ DE COMMANDE DE CHARGE ET DE DÉCHARGE

(43) Date of publication of application: 27.12.2023
(73) Proprietor: Huawei Digital Power Technologies Co., Ltd., Shenzhen, Guangdong 518043 (CN)
(72) Inventor: LI, Lin, Shenzhen, Guangdong 518129 (CN); XU, Zhiwu, Shenzhen, Guangdong 518129 (CN); ZHOU, He, Shenzhen, Guangdong 518129 (CN)
(74) Representative: Isarpatent
(86) International application number: PCT/CN2021/078181
(87) International publication number: WO 2022/178839

(56) References cited:
- WO-A1-2020/203455
- CN-A- 103 944 157
- CN-A- 103 944 230
- CN-A- 105 024 582
- CN-A- 105 262 158
- JP-A- 2001 008 383
- US-A1- 2016 094 065
- US-A1- 2019 020 074

## Description

This application relates to the field of energy technologies, and in particular, to an energy system and a charging and discharging control method.

### BACKGROUND

As people are increasingly concerned about clean energy, a photovoltaic system that can convert photon energy (such as solar energy) into electric energy also becomes one of important research directions in the new energy field. Currently, most photovoltaic systems use a Direct Current (DC) coupled optical storage architecture. The photovoltaic system mainly includes a photovoltaic panel, an energy storage battery, and a photovoltaic inverter.

An input end of the photovoltaic inverter is connected to the photovoltaic panel and the energy storage battery separately, and an output end of the photovoltaic inverter is connected to an Alternating Current (AC) power grid. The photovoltaic panel may convert photon energy into DC electric energy. When output power of the photovoltaic panel is excessively high, the energy storage battery may store redundant DC electric energy generated by the photovoltaic panel. Alternatively, the energy storage battery may release DC electric energy when the output power of the photovoltaic panel is excessively low, to compensate for insufficiency of the output power of the photovoltaic panel. In other words, the photovoltaic inverter may receive DC electric energy output by the photovoltaic panel and/or the energy storage battery, convert the received DC electric energy into AC electric energy, and then feed the AC electric energy to the AC power grid, that is, implement a "grid connection".

Although power of the DC electric energy received by the photovoltaic inverter may be adjusted by controlling charge and discharge of the energy storage battery, the energy storage battery is also exposed to an overdischarge or overcharge risk. When the energy storage battery is overdischarged, a battery level of the energy storage battery may be excessively low. Further, the energy storage battery is damaged, and the energy storage battery cannot be charged again. When the battery is overcharged, an electrolyte in the energy storage battery may have an irreversible polarization phenomenon, and further, a battery life is shortened.

Therefore, currently, a charging and discharging control method for the battery in the photovoltaic system needs to be further studied, to prevent overcharge and overdischarge of the energy storage battery.

US 2016/094065 Al discloses classic overcharge and overdischarge protection, meaning preventing charging in the overcharge region and preventing discharging in the overdischarge region.Usually a battery in the overcharge region is allowed to discharge and a battery in the overdischarge region is allowed to charge.

### SUMMARY

This application provides an energy system and a charging and discharging control method. The energy system mainly includes a charging and discharging control apparatus and an energy storage battery. The charging and discharging control apparatus can perform the charging and discharging control method provided in this application, to help prevent overcharge and overdischarge of the energy storage battery.

According to a first aspect, this application provides an energy system. The energy system mainly includes an energy storage battery and a charging and discharging control apparatus. The charging and discharging control apparatus is connected to the energy storage battery. The charging and discharging control apparatus may obtain a battery level of the energy storage battery, and obtain a charging current of the energy storage battery or a discharging current of the energy storage battery. When the battery level is not greater than a discharging level threshold and the charging current of the energy storage battery is less than a charging current threshold, the charging and discharging control apparatus may control the energy storage battery to stop charging and discharging. When the battery level is not less than a charging level threshold and the discharging current of the energy storage battery is less than a discharging current threshold, the charging and discharging control apparatus may also control the energy storage battery to stop charging and discharging.

In this application, the discharging level threshold may be understood as a minimum value that can be reached by the battery level. If the battery level is less than the discharging level threshold, the energy storage battery has an overdischarge risk. Therefore, when the battery level is not greater than the discharging level threshold, the energy storage battery cannot continue to be discharged.

In addition, if the charging current is less than the charging current threshold, the charging and discharging control apparatus controls the energy storage battery not to be charged either. The charging current threshold may be a threshold determined based on identification precision of the charging and discharging control apparatus. When the charging current is less than the charging current threshold, the charging and discharging control apparatus may be unable to accurately identify a change of the charging current, and the energy storage battery may enter a low-current discharging state. If the battery level is not greater than the discharging level threshold, discharging the energy storage battery with a small current may cause overdischarge of the energy storage battery. Therefore, when the battery level is not greater than the discharging level threshold and the charging current of the energy storage battery is less than the charging current threshold, the charging and discharging control apparatus may control the energy storage battery to stop charging and discharging.

In this application, the charging level threshold may be understood as a maximum value that can be reached by the battery level. If the battery level is greater than the charging level threshold, the energy storage battery has an overcharge risk. Therefore, when the battery level is not less than the charging level threshold, the energy storage battery cannot continue to be charged.

In addition, if the discharging current is less than the discharging current threshold, the charging and discharging control apparatus controls the energy storage battery not to be discharged either. The discharging current threshold may be a threshold determined based on identification precision of the charging and discharging control apparatus. When the discharging current is less than the discharging current threshold, the charging and discharging control apparatus may be unable to accurately identify a change of the discharging current, and the energy storage battery may enter a low-current charging state. If the battery level is not less than the charging level threshold, charging the energy storage battery with a small current may cause overcharge of the energy storage battery. Therefore, when the battery level is not less than the charging level threshold and the discharging current of the energy storage battery is less than the discharging current threshold, the charging and discharging control apparatus may control the energy storage battery to stop charging and discharging.

To prevent the charging and discharging control apparatus from frequently changing charging and discharging states of the energy storage battery due to interference factors such as an energy fluctuation and a detection error in the energy system, in a possible implementation, in a first time period, when the battery level is continuously not greater than the discharging level threshold and the charging current of the energy storage battery is continuously less than the charging current threshold, the charging and discharging control apparatus may control the energy storage battery to stop charging and discharging. In this case, if the battery level is not greater than the discharging level threshold due to a short-time interference factor, and the charging current of the energy storage battery is less than the charging current threshold, the charging and discharging control apparatus may not control the energy storage battery to stop charging and discharging.

Similarly, in a possible implementation, in a fourth time period, when the battery level is continuously not less than the charging level threshold and the discharging current of the energy storage battery is continuously less than the discharging current threshold, the charging and discharging control apparatus may control the energy storage battery to stop charging and discharging. In this case, if the battery level is not less than the charging level threshold due to a short-time interference factor, and the discharging current of the energy storage battery is less than the discharging current threshold, the charging and discharging control apparatus may not control the energy storage battery to stop charging and discharging.

In this application, the charging and discharging control apparatus may use a physical quantity related to the battery level to represent the battery level. In a possible implementation, the battery level of the energy storage battery may be represented by using a state of charge SOC of the energy storage battery. Specifically, the charging and discharging control apparatus may obtain the state of charge SOC of the energy storage battery. When the SOC is not greater than a first SOC threshold, the SOC may indicate that the battery level is not greater than the discharging level threshold. When the SOC is not less than a second SOC threshold, the SOC may indicate that the battery level is not less than the charging level threshold.

The SOC of the energy storage battery may be understood as a ratio of remaining battery power of the energy storage battery to battery power of the energy storage battery fully charged, and is usually represented by a percentage. A value of the SOC ranges from 0 to 1. When the SOC is 0, it indicates that the energy storage battery is fully discharged. When the SOC is 1, it indicates that the energy storage battery is fully charged. The charging and discharging control apparatus may calculate the SOC of the energy storage battery based on released electric energy and/or stored electric energy of the energy storage battery, and may further determine a relative value relationship between the battery level of the energy storage battery and the charging level threshold and the discharging level threshold based on the SOC.

In another possible implementation, the battery level of the energy storage battery may be represented by using a battery voltage of the energy storage battery. Specifically, the charging and discharging control apparatus may obtain the battery voltage of the energy storage battery. When the battery voltage is not greater than a first battery voltage threshold, the battery voltage may indicate that the battery level is not greater than the discharging level threshold. When the battery voltage is not less than a second battery voltage threshold, the battery voltage indicates that the battery level is not less than the charging level threshold.

In a charging process of the energy storage battery, the battery voltage of the energy storage battery gradually increases. In a discharging process of the energy storage battery, the battery voltage of the energy storage battery gradually decreases. Therefore, the battery level of the energy storage battery may be further represented by using the battery voltage of the energy storage battery. The charging and discharging control apparatus may determine a relative value relationship between the battery level of the energy storage battery and the charging level threshold and the discharging level threshold based on the battery voltage of the energy storage battery.

It should be noted that the charging and discharging control apparatus in this application may further control charging of the energy storage battery when the energy storage battery can be safely charged. For example, when the battery level is not greater than the discharging level threshold and power of charging electric energy received by the charging and discharging control apparatus is not less than a charging power threshold, the charging and discharging control apparatus may further control charging of the energy storage battery by using the charging electric energy.

In this application, the charging power threshold is greater than or equal to a product of the first battery voltage threshold and the charging current threshold. The first voltage threshold may be a minimum voltage that can be reached in the discharging process of the energy storage battery, that is, a battery voltage of the energy storage battery when the battery level of the energy storage battery is less than or equal to the discharging level threshold. Because the charging power threshold is greater than or equal to the product of the first battery voltage threshold and the charging current threshold, and the battery voltage is the first battery voltage threshold, when the battery level of the energy storage battery is less than or equal to the discharging level threshold, the energy storage battery is charged with charging power equal to the charging power threshold, and this helps ensure that the charging current is greater than or equal to the charging current threshold.

For another example, in a second time period, when the battery level is continuously not greater than the discharging level threshold and the power of the charging electric energy received by the charging and discharging control apparatus is continuously not less than the charging power threshold, the charging and discharging control apparatus may further control charging of the energy storage battery by using the charging electric energy. A specific implementation of the charging power threshold is the same as that described above, and details are not described herein again. Setting the second time period helps prevent the charging and discharging control apparatus from frequently changing the charging and discharging states of the energy storage battery due to a short-time interference factor.

In this application, there are a plurality of possible implementations of AC electric energy received by the charging and discharging control apparatus, specifically as follows:

Example 1: The charging and discharging control apparatus may be connected to an AC power grid, and the charging electric energy received by the charging and discharging control apparatus may include AC electric energy received by the charging and discharging control apparatus from the AC power grid. For example, when the energy system is a photovoltaic system, the charging and discharging control apparatus may be a photovoltaic inverter.

The charging and discharging control apparatus may perform AC to DC conversion on the received charging electric energy to obtain DC charging electric energy. The charging and discharging control apparatus may output the DC charging electric energy obtained through conversion to the energy storage battery to charge the energy storage battery.

Example 2: When the energy system is used as a photovoltaic system, the energy system further includes a photovoltaic panel, the photovoltaic panel is connected to the charging and discharging control apparatus, and the photovoltaic panel may convert received photon energy into DC photovoltaic electric energy. In this application, the charging and discharging control apparatus may be a photovoltaic inverter. When output power of the photovoltaic panel is relatively high, the charging and discharging control apparatus may perform DC to AC conversion on a part of photovoltaic electric energy output by the photovoltaic panel, output AC electric energy obtained through conversion to an AC power grid, and output another part of photovoltaic electric energy output by the photovoltaic panel, to the energy storage battery as charging electric energy.

Example 3: When the energy system is used as a photovoltaic system, the energy system further includes a photovoltaic panel, the photovoltaic panel may convert received photon energy into DC photovoltaic electric energy, and the charging electric energy may include a part or all of photovoltaic electric energy output by the photovoltaic panel. The energy system may further include a photovoltaic inverter. When charging the energy storage battery, the photovoltaic inverter may convert AC electric energy received from an AC power grid into DC power grid electric energy, and the charging electric energy may include the power grid electric energy.

In other words, the charging electric energy received by the charging and discharging control apparatus may include only a part or all of the photovoltaic electric energy output by the photovoltaic panel, or may include only the DC power grid electric energy output by the photovoltaic inverter, or may include both a part or all of the photovoltaic electric energy output by the photovoltaic panel and the DC power grid electric energy output by the photovoltaic inverter.

The charging and discharging control apparatus may be used as a DC-DC converter connected to the energy storage battery. The charging and discharging control apparatus may perform DC to DC conversion on the charging electric energy, so that a voltage of the converted charging electric energy adapts to the energy storage battery. The charging and discharging control apparatus outputs the converted charging electric energy to the energy storage battery to charge the energy storage battery.

It should be noted that the charging and discharging control apparatus in this application may further control discharging of the energy storage battery when the energy storage battery can be safely discharged. For example, when the battery level is not less than the charging level threshold and power of battery electric energy is not less than a discharging power threshold, the charging and discharging control apparatus may control discharging of the energy storage battery.

In this application, the discharging power threshold is greater than or equal to a product of the second battery voltage threshold and the discharging current threshold. The second voltage threshold may be a maximum voltage that can be reached in the charging process of the energy storage battery, that is, a battery voltage of the energy storage battery when the battery level of the energy storage battery is greater than or equal to the charging level threshold. Because the discharging power threshold is greater than or equal to the product of the second battery voltage threshold and the discharging current threshold, and the battery voltage is the second battery voltage threshold, when the battery level of the energy storage battery is greater than or equal to the charging level threshold, the energy storage battery is discharged with discharging power equal to the discharging power threshold, and this helps ensure that the discharging current is greater than or equal to the discharging current threshold.

For another example, in a third time period, when the battery level is continuously not less than the charging level threshold and power of battery electric energy is continuously not less than a discharging power threshold, the charging and discharging control apparatus may further control discharging of the energy storage battery. A specific implementation of the discharging power threshold is the same as that described above, and details are not described herein again. Setting the third time period helps prevent the charging and discharging control apparatus from frequently changing the charging and discharging states of the energy storage battery due to a short-time interference factor.

In this application, the charging and discharging control apparatus may further convert the received battery electric energy. Details are as follows:

Example 1: The charging and discharging control apparatus may be further connected to the AC power grid, and the charging and discharging control apparatus may perform DC to AC conversion on the received battery electric energy to obtain AC electric energy; and the charging and discharging control apparatus further outputs the AC electric energy to the AC power grid. For example, when the energy system is a photovoltaic system, the charging and discharging control apparatus may be a photovoltaic inverter.

Example 2: When the energy system is used as a photovoltaic system, the energy system further includes a photovoltaic panel, the photovoltaic panel is connected to the charging and discharging control apparatus, and the photovoltaic panel may convert received photon energy into DC photovoltaic electric energy. In this application, the charging and discharging control apparatus may be a photovoltaic inverter. When power of the photovoltaic electric energy is less than target power of the AC power grid, the charging and discharging control apparatus may control discharging of the energy storage battery, where the power of the battery electric energy is equal to a difference obtained by subtracting the power of the photovoltaic electric energy from the target power.

Example 3: When the energy system is used as a photovoltaic system, the energy system further includes a photovoltaic panel and a photovoltaic inverter, and the photovoltaic inverter is connected to the photovoltaic panel and the charging and discharging control apparatus separately. The photovoltaic panel may convert received photon energy into DC photovoltaic electric energy. The charging and discharging control apparatus may be used as a DC-DC converter connected to the energy storage battery. When power of the photovoltaic electric energy is less than target power of the AC power grid, the charging and discharging control apparatus may perform DC to DC conversion on the received battery electric energy, so that the converted battery electric energy adapts to the photovoltaic inverter, where the power of the battery electric energy is equal to a difference obtained by subtracting the power of the photovoltaic electric energy from the target power. The photovoltaic inverter may perform DC to AC conversion on the received photovoltaic electric energy and/or battery electric energy, and output AC electric energy obtained through conversion to the AC power grid.

According to a second aspect, this application provides a charging and discharging control method. The charging and discharging method may be applied to the charging and discharging control apparatus in the foregoing energy system. For a technical effect of a corresponding solution in the second aspect, refer to a technical effect that can be achieved according to the corresponding solution in the first aspect. Details are not described herein again.

For example, the charging and discharging control method provided in this application mainly includes: the charging and discharging control apparatus obtains a battery level of the energy storage battery, and obtains a charging current of the energy storage battery or a discharging current of the energy storage battery; when the battery level is not greater than a discharging level threshold and the charging current of the energy storage battery is less than a charging current threshold, the charging and discharging control apparatus controls the energy storage battery to stop charging and discharging; and when the battery level is not less than a charging level threshold and the discharging current of the energy storage battery is less than a discharging current threshold, the charging and discharging control apparatus controls the energy storage battery to stop charging and discharging.

To prevent the charging and discharging control apparatus from frequently changing charging and discharging states of the energy storage battery due to interference factors such as an energy fluctuation and a detection error in the energy system, in a possible implementation, in a first time period, when the battery level is continuously not greater than the discharging level threshold and the charging current of the energy storage battery is continuously less than the charging current threshold, the charging and discharging control apparatus may control the energy storage battery to stop charging and discharging. In this case, if the battery level is not greater than the discharging level threshold due to a short-time interference factor, and the charging current of the energy storage battery is less than the charging current threshold, the charging and discharging control apparatus may not control the energy storage battery to stop charging and discharging.

Similarly, in a possible implementation, in a fourth time period, when the battery level is continuously not less than the charging level threshold and the discharging current of the energy storage battery is continuously less than the discharging current threshold, the charging and discharging control apparatus may control the energy storage battery to stop charging and discharging. In this case, if the battery level is not less than the charging level threshold due to a short-time interference factor, and the discharging current of the energy storage battery is less than the discharging current threshold, the charging and discharging control apparatus may not control the energy storage battery to stop charging and discharging.

In this application, the charging and discharging control apparatus may use a physical quantity related to the battery level to represent the battery level. In a possible implementation, the battery level of the energy storage battery may be represented by using a state of charge SOC of the energy storage battery. Specifically, the charging and discharging control apparatus may obtain the state of charge SOC of the energy storage battery. When the SOC is not greater than a first SOC threshold, the SOC may indicate that the battery level is not greater than the discharging level threshold. When the SOC is not less than a second SOC threshold, the SOC may indicate that the battery level is not less than the charging level threshold.

In another possible implementation, the battery level of the energy storage battery may be represented by using a battery voltage of the energy storage battery. Specifically, the charging and discharging control apparatus may obtain the battery voltage of the energy storage battery. When the battery voltage is not greater than a first battery voltage threshold, the battery voltage may indicate that the battery level is not greater than the discharging level threshold. When the battery voltage is not less than a second battery voltage threshold, the battery voltage indicates that the battery level is not less than the charging level threshold.

It should be noted that the charging and discharging control apparatus in this application may further control charging of the energy storage battery when the energy storage battery can be safely charged. For example, when the battery level is not greater than the discharging level threshold and power of charging electric energy received by the charging and discharging control apparatus is not less than a charging power threshold, the charging and discharging control apparatus may further control charging of the energy storage battery by using the charging electric energy.

For another example, in a second time period, when the battery level is continuously not greater than the discharging level threshold and the power of the charging electric energy received by the charging and discharging control apparatus is continuously not less than the charging power threshold, the charging and discharging control apparatus may further control charging of the energy storage battery by using the charging electric energy.

It should be noted that the charging and discharging control apparatus in this application may further control discharging of the energy storage battery when the energy storage battery can be safely discharged. For example, when the battery level is not less than the charging level threshold and power of battery electric energy is not less than a discharging power threshold, the charging and discharging control apparatus may control discharging of the energy storage battery.

For another example, in a third time period, when the battery level is continuously not less than the charging level threshold and power of battery electric energy is continuously not less than a discharging power threshold, the charging and discharging control apparatus may further control discharging of the energy storage battery.

These or other aspects of this application are clearer and easier to understand in the following description of embodiments.

### BRIEF DESCRIPTION OF DRAWINGS

FIG. 1 is a schematic diagram of a structure of an energy system according to an embodiment of this application;
FIG. 2 is a schematic diagram of a structure of a photovoltaic system according to an embodiment of this application;
FIG. 3 is a schematic diagram of a structure of another photovoltaic system according to an embodiment of this application;
FIG. 4 is a schematic flowchart of a charging and discharging control method according to an embodiment of this application;
FIG. 5 is a schematic flowchart of a charging and discharging control method for preventing overcharge according to an embodiment of this application;
FIG. 6A and FIG. 6B are a schematic flowchart of a charging and discharging control method for preventing overdischarge according to an embodiment of this application;
FIG. 7A and FIG. 7B are a schematic flowchart of a specific charging and discharging control method according to an embodiment of this application; and
FIG. 8 is a schematic diagram for determining a current value of a discharging current or a charging current according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in the description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: A exists alone, both A and B exist, and B exists alone. In addition, the character "/" usually indicates an "or" relationship between the associated objects unless otherwise specified. In addition, it should be understood that, in the description of this application, terms such as "first" and "second" are merely used for distinguishing and description, but should not be understood as indicating or implying relative importance, or should not be understood as indicating or implying a sequence.

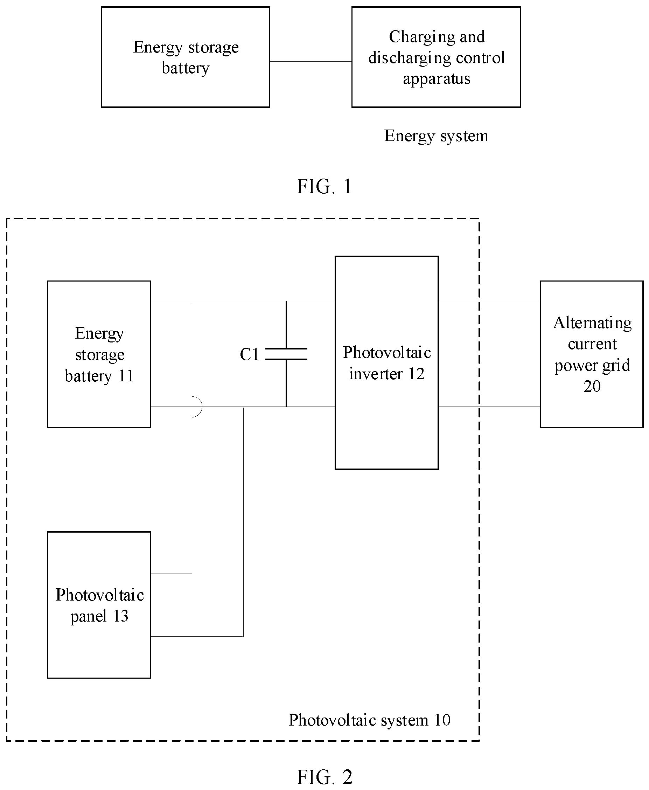

With development of the new energy field, more energy systems have energy storage functions. As shown in FIG. 1, an energy system may include an energy storage battery and a charging and discharging control apparatus. The charging and discharging control apparatus is connected to the energy storage battery, and may control charging and discharging of the energy storage battery, to adjust overall output power of the energy system. In an embodiment of this application, an energy system may be a photovoltaic system, a hydropower generation system, a wind power generation system, or the like. For ease of understanding, the following uses the photovoltaic system as an example for description in this embodiment of this application.

The photovoltaic system is an energy system that can use photon energy (solar energy) to generate power. Currently, most photovoltaic systems use a DC coupled optical storage architecture. The photovoltaic system mainly includes a photovoltaic panel, an energy storage battery, and a photovoltaic inverter. According to a connection relationship between the energy storage battery and the photovoltaic inverter, the photovoltaic system may be in a single-stage form or a multi-stage form.

The photovoltaic system in the single-stage form may be shown in FIG. 2. As shown in FIG. 2, the photovoltaic system 10 mainly includes an energy storage battery 11, a photovoltaic inverter 12, and a photovoltaic panel 13. A first end of the photovoltaic inverter 12 is connected to the energy storage battery 11 and the photovoltaic panel 13 separately, and a second end of the photovoltaic inverter 12 is connected to an AC power grid 20.

The photovoltaic panel 13 may convert absorbed photon energy (solar energy) into photovoltaic electric energy. The photovoltaic electric energy is usually DC electric energy. It may be understood that because light intensity of the photovoltaic panel 13 is unstable, output power of the photovoltaic panel 13 also dynamically changes. The photovoltaic inverter 12 may control charging or discharging of the energy storage battery 11 based on a power requirement of the AC power grid 20. In other words, in the photovoltaic system 10 shown in FIG. 2, the photovoltaic inverter 12 may be used as a charging and discharging control apparatus for controlling the energy storage battery 11.

Specifically, when the energy storage battery 11 is charged, if the output power of the photovoltaic panel 13 is relatively high, the photovoltaic inverter 12 may perform DC to AC conversion on one part of photovoltaic electric energy output by the photovoltaic panel 13, and output obtained AC electric energy to the AC power grid 20, that is, implement a "grid connection". The photovoltaic inverter 12 uses another part of photovoltaic electric energy output by the photovoltaic panel 13 as charging electric energy, and provides the charging electric energy for the energy storage battery 11, to charge the energy storage battery 11.

For example, target power required by the AC power grid 20 is 60 W, and power of photovoltaic electric energy output by the photovoltaic panel 13 is 80 W. The photovoltaic inverter 12 may feed 60 W photovoltaic electric energy to the power grid, and the remaining 20 W photovoltaic electric energy may be stored in the energy storage battery 11 as charging electric energy.

When charging the energy storage battery 11, the photovoltaic inverter 12 may further receive AC electric energy from the AC power grid 20, and perform AC to DC conversion on the AC electric energy to obtain DC power grid electric energy. The photovoltaic inverter 12 outputs the power grid electric energy to the energy storage battery 11 to charge the energy storage battery 11.

When the output power of the photovoltaic panel 13 is insufficient, the photovoltaic inverter 12 may further control discharging of the energy storage battery 11. The photovoltaic inverter 12 may receive photovoltaic electric energy output by the photovoltaic panel 13 and battery electric energy output by the energy storage battery 11. The battery electric energy is also mostly DC electric energy. The photovoltaic inverter 12 may perform DC to AC conversion on received DC electric energy, and output AC electric energy obtained through conversion to the AC power grid 20.

For example, the target power required by the AC power grid 20 is 60 W, and the power of the photovoltaic electric energy output by the photovoltaic panel 13 is 40 W. In this case, the photovoltaic inverter 12 may control the energy storage battery 11 to output 20 W battery electric energy. Therefore, total input power of the photovoltaic inverter 12 may be maintained at 60 W, so that 60 W AC electric energy can be provided for the AC power grid 20.

It may be understood that, in a scenario such as a cloudy day or night, the output power of the photovoltaic panel 13 may also approach 0. In this case, it may be considered that only the energy storage battery 11 supplies power to the photovoltaic inverter 12. In other words, the DC electric energy received by the photovoltaic inverter 12 may come from only the photovoltaic panel 13, or may come from only the energy storage battery 11, or may be hybrid electric energy including battery electric energy output by the energy storage battery 11 and photovoltaic electric energy output by the photovoltaic panel 13.

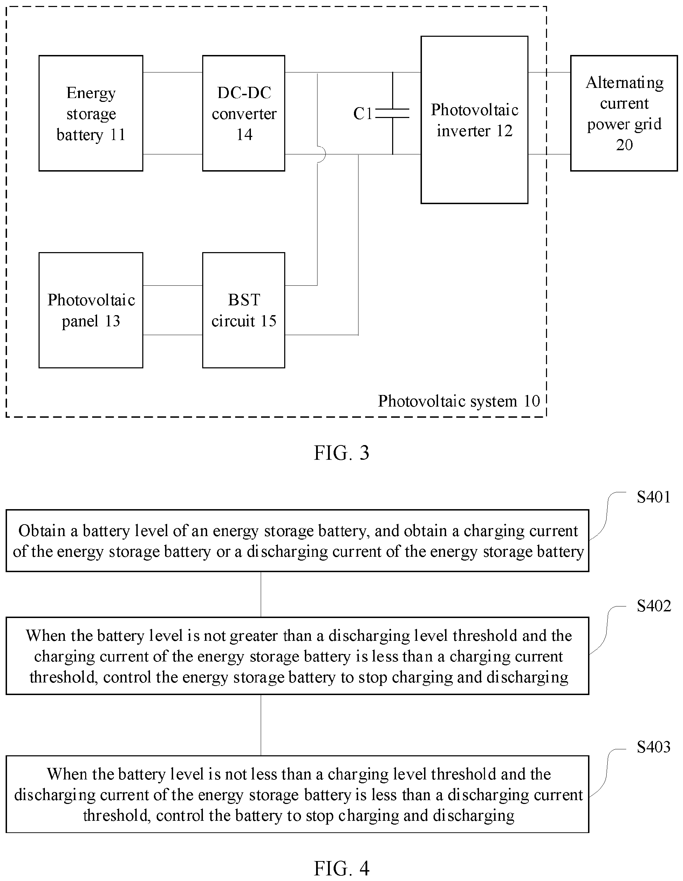

The photovoltaic system in the multi-stage form may be shown in FIG. 3. As shown in FIG. 3, a DC to DC converter 14 is further included between the energy storage battery 11 and the photovoltaic inverter 12. A first end of the DC-DC converter 14 is connected to the energy storage battery 11, and a second end of the DC-DC converter 14 is connected to the photovoltaic inverter 12 and the photovoltaic panel 13 separately.

During discharging of the energy storage battery 11, the DC-DC converter 14 may perform voltage conversion on the battery electric energy output by the energy storage battery 11, and output converted battery electric energy by using the second end of the DC-DC converter 14, so that a voltage of the converted battery electric energy can adapt to the photovoltaic inverter 12.

During charging of the energy storage battery 11, the second end of the DC-DC converter 14 may receive charging electric energy. The charging electric energy may include a part or all of the photovoltaic electric energy from the photovoltaic panel 13. For example, when the output power of the photovoltaic panel 13 is relatively high, a part of the photovoltaic electric energy that exceeds the target power may be input to the DC-DC converter 14 as charging electric energy. For another example, when the photovoltaic system 10 does not need to supply power to the AC power grid 20, all the photovoltaic electric energy output by the photovoltaic panel 13 may be input to the DC-DC converter 14 as charging electric energy.

In addition, the photovoltaic inverter 12 may further receive AC electric energy from the AC power grid 20, and perform AC to DC conversion on the AC electric energy to obtain DC power grid electric energy. The power grid electric energy may also be input to the DC-DC converter 14 as charging electric energy.

In other words, the charging electric energy received by the DC-DC converter 14 may include a part or all of the photovoltaic electric energy output by the photovoltaic panel 13, and may further include the power grid electric energy output by the photovoltaic inverter 12. The DC-DC converter 14 may perform voltage conversion on the charging electric energy received by the second end of the DC-DC converter 14, and output the converted charging electric energy by using the first end of the DC-DC converter 14, so that a voltage of the converted charging electric energy can adapt to the energy storage battery 11.

It can be learned that, when the DC-DC converter 14 outputs the charging electric energy to the energy storage battery 11, charging of the energy storage battery 11 may be controlled, and when the DC-DC converter 14 receives the battery electric energy output by the energy storage battery 11, discharging of the energy storage battery 11 may be controlled. The DC-DC converter 14 may be used as a charging and discharging control apparatus for controlling the energy storage battery 11.

As shown in FIG. 3, some photovoltaic systems 10 may further include a boost (boost, BST) circuit 15. The BST circuit 15 is located between the photovoltaic panel and the photovoltaic inverter 12. A first end of the BST circuit 15 is connected to the photovoltaic panel 13, and a second end of the BST circuit 15 is connected to the DC-DC converter 14 and the photovoltaic inverter 12 separately. The BST circuit 15 is a DC to DC converter, and may perform voltage conversion on photovoltaic electric energy output by the photovoltaic panel 13, so that a voltage of the converted photovoltaic electric energy can adapt to the DC-DC converter 14 and/or the photovoltaic inverter 12.

In summary, as the output power of the photovoltaic panel 13 changes, the energy storage battery 11 may be charged or discharged. However, in a discharging process of the energy storage battery 11, if a battery level of the energy storage battery 11 is excessively low, the energy storage battery 11 may be damaged, and the energy storage battery 11 cannot be charged again. This case may also be referred to as overdischarge. In overcharging of the energy storage battery 11, if the battery level of the energy storage battery 11 is excessively high, an irreversible polarization phenomenon may occur in an electrolyte in the battery, and further, a battery life is shortened. This case may also be referred to as overcharge.

To prevent the energy storage battery 11 from being overcharged and overdischarged, an embodiment of this application provides a charging and discharging control method. The method may be applied to a charging and discharging control apparatus. It should be noted that, in this embodiment of this application, the charging and discharging control apparatus may charge the energy storage battery 11 or receive battery electric energy output by the energy storage battery 11. For example, the charging and discharging control apparatus may be the photovoltaic inverter 12 shown in FIG. 2, or may be the DC-DC converter 14 shown in FIG. 3.

For ease of understanding, in this embodiment of this application, a scenario in which the charging and discharging control apparatus is the DC-DC converter 14 shown in FIG. 3 is used as an example for description. Unless otherwise specified, the following embodiments are also applicable to a scenario in which the charging and discharging control apparatus is the photovoltaic inverter 12 shown in FIG. 2.

For example, the DC-DC converter 14 may perform a charging and discharging control method shown in FIG. 4. The method mainly includes the following steps.

S401. Obtain a battery level of an energy storage battery, and obtain a charging current of the energy storage battery or a discharging current of the energy storage battery. The charging current received by the energy storage battery 11 may be understood as a current that is output from a positive electrode of a first end of a DC-DC converter 14 to a positive electrode of the energy storage battery 11 and that flows back from a negative electrode of the energy storage battery 11 to a negative electrode of the first end of the DC-DC converter 14. The discharging current of the energy storage battery 11 may be understood as a current that is output from the positive electrode of the energy storage battery 11 and that flows back to the negative electrode of the energy storage battery 11.

The battery level of the energy storage battery 11 is a level of remaining battery power stored in the energy storage battery 11. In a possible implementation, the battery level of the energy storage battery 11 may be represented by using a state of charge (state of charge, SOC) of the energy storage battery 11. The SOC of the energy storage battery 11 may be understood as a ratio of remaining battery power of the energy storage battery 11 to battery power of the energy storage battery 11 fully charged, and is usually represented by a percentage. A value of the SOC ranges from 0 to 1. When the SOC is 0, it indicates that the energy storage battery 11 is fully discharged. When the SOC is 1, it indicates that the energy storage battery 11 is fully charged. The DC-DC converter 14 may calculate the SOC of the energy storage battery 11 based on released electric energy and/or stored electric energy of the energy storage battery 11. For specific implementation, refer to the conventional technology. Details are not described herein.

In another possible implementation, the battery level of the energy storage battery 11 may be further represented by using a battery voltage of the energy storage battery 11. In a charging process of the energy storage battery 11, the battery voltage of the energy storage battery 11 gradually increases. In a discharging process of the energy storage battery 11, the battery voltage of the energy storage battery 11 gradually decreases. Therefore, the battery level of the energy storage battery 11 may be further represented by using the battery voltage of the energy storage battery 11.

It should be noted that a specific implementation in which the DC-DC converter 14 obtains the battery level of the energy storage battery is not limited in this embodiment of this application. For example, the DC-DC converter 14 may estimate the battery level of the energy storage battery 11 based on charging electric energy provided for the energy storage battery 11 and battery electric energy received from the energy storage battery 11. For another example, the energy storage battery 11 may send a level indication message to the DC-DC converter 14, where the level indication message may indicate a current battery level of the energy storage battery 11. The DC-DC converter 14 may obtain the battery level of the energy storage battery 11 based on the level indication message.

After obtaining the battery level of the energy storage battery 11, the DC-DC converter 14 may further determine a relationship between the battery level and a level threshold. Level thresholds include a charging level threshold and a discharging level threshold. The following separately describes the two thresholds.

### I. Discharging level threshold

During discharging of the energy storage battery 11, the DC-DC converter 14 may obtain the discharging level threshold. The discharging level threshold may be understood as a minimum value that can be reached by the battery level of the energy storage battery 11 to prevent overdischarge of the energy storage battery 11. In other words, when the battery level of the energy storage battery 11 is lower than the discharging level threshold, the energy storage battery 11 has an overdischarge risk.

For example, when the SOC of the energy storage battery 11 is used to represent the battery level of the energy storage battery 11, the discharging level threshold may also be represented by using a first SOC threshold. To be specific, when the SOC of the energy storage battery 11 is not greater than the first SOC threshold, it indicates that the battery level of the energy storage battery 11 is not greater than the discharging level threshold.

For another example, when the battery voltage of the energy storage battery 11 is used to represent the battery level of the energy storage battery 11, the discharging level threshold may also be represented by using a first battery voltage threshold. To be specific, when the battery voltage of the energy storage battery 11 is not greater than the first battery voltage threshold, it indicates that the battery level of the energy storage battery 11 is not greater than the discharging level threshold.

It may be understood that there are the following two cases with respect to a relative value relationship between the battery level of the energy storage battery 11 and the discharging level threshold.

Case 1: The battery level of the energy storage battery 11 is greater than the discharging level threshold. In this case, the DC-DC converter 14 may control discharging of the energy storage battery 11. For example, when output power of a photovoltaic panel 13 is relatively low, the DC-DC converter 14 may control discharging of the energy storage battery 11, that is, receive the battery electric energy output by the energy storage battery 11.

Case 2: The battery level of the energy storage battery 11 is not greater than (less than or equal to) the discharging level threshold. In this case, the DC-DC converter 14 may control the energy storage battery 11 to stop discharging, to prevent overdischarge of the energy storage battery 11. In addition, when the output power of the photovoltaic panel 13 is relatively high, the energy storage battery 11 is charged by using redundant photovoltaic electric energy. The DC-DC converter 14 may also receive power grid electric energy provided by a photovoltaic inverter 12, and charge the energy storage battery 11 by using the power grid electric energy.

It should be noted that, in a process of charging the energy storage battery 11, the DC-DC converter 14 may obtain a charging current output by the energy storage battery 11, to monitor a charging status of the energy storage battery 11. In the charging process, when the battery level of the energy storage battery 11 is not greater than the discharging level threshold, it is possible that the output power of the photovoltaic panel 13 is slightly greater than power required by an AC power grid 20. In this case, the energy storage battery 11 is charged with a small current, that is, the charging current is relatively small. A slight change of the output power of the photovoltaic panel 13 may cause the output power of the photovoltaic panel 13 to be slightly less than the power required by the AC power grid 20, and the energy storage battery 11 switches from a charging state to a discharging state of low-current discharging.

Due to a detection error of the charging current and the discharging current, the DC-DC converter 14 may not be able to identify a low discharging current and charging current. For example, if a detection precision of the DC-DC converter 14 is 0.1 A, the DC-DC converter 14 cannot identify a charging current and a discharging current from 0 A to 0.1 A, and therefore cannot identify that the energy storage battery 11 has switched from the charging state to the discharging state. When the battery level of the energy storage battery 11 is not greater than the discharging level threshold, if the energy storage battery 11 still continues to be discharged with a low discharging current, the energy storage battery 11 may be overdischarged.

In view of this, the DC-DC converter 14 may further obtain the charging current of the energy storage battery 11. It should be noted that a specific implementation in which the DC-DC converter 14 obtains the charging current is not limited in this embodiment of this application. For example, a detection circuit is disposed in the DC-DC converter 14, and the DC-DC converter 14 may detect the charging current by using the detection circuit. For another example, the energy storage battery 11 may send a charging current indication message to the DC-DC converter 14, where the charging current indication message may indicate a current value of the charging current. The DC-DC converter 14 may obtain the charging current of the energy storage battery 11 based on the charging current indication message.

For example, in S402, when the battery level is not greater than the discharging level threshold and the charging current of the energy storage battery 11 is less than a charging current threshold, the battery is controlled to stop charging and discharging. For example, the charging current threshold may be a minimum value of the charging current that can be detected by the DC-DC converter 14. For example, if detection precision of the DC-DC converter 14 is 0.1 A, the minimum value of the charging current that can be detected by the DC-DC converter 14 is 0.1 A, and the charging current threshold may be set to 0.1 A.

It may be understood that a specific implementation of the charging current threshold is not limited in this embodiment of this application. For example, to further prevent overdischarge of the energy storage battery 11, a margin of 0.05 A may be added on a basis that the minimum value of the charging current that can be detected by the DC-DC converter 14 is 0.1 A, that is, the charging current threshold is set to 0.15 A.

When the battery level is not greater than the discharging level threshold, and the charging current of the energy storage battery 11 is less than the charging current threshold, it indicates that the energy storage battery 11 has a risk of discharging with a low current in this case. Therefore, to prevent overdischarge of the energy storage battery 11, the DC-DC converter 14 stops charging and discharging the energy storage battery 11.

The DC-DC converter 14 includes a power conversion circuit. One or more power transistors are disposed in the power conversion circuit. The DC-DC converter 14 controls turn-on and turn-off of each power transistor through pulse width modulation (pulse width modulation, PWM), to implement voltage conversion by using the power conversion circuit. The DC-DC converter 14 may adjust a conversion ratio by changing a PWM policy, to provide voltage-adapted charging electric energy for the energy storage battery 11, or provide voltage-adapted battery electric energy for the photovoltaic inverter 12.

In this embodiment of this application, the DC-DC converter 14 may stop charging and discharging the energy storage battery 11 through PWM wave sealing. The PWM wave sealing means that a power tube of the power conversion circuit is in a turn-off state and does not perform a wave chopping operation, and the power conversion circuit stops voltage conversion.

### II. Charging level threshold

During charging of the energy storage battery 11, the DC-DC converter 14 may obtain the charging level threshold. The charging level threshold may be understood as a maximum value that can be reached by the battery level of the energy storage battery 11 to prevent overcharge of the energy storage battery 11. In other words, when the battery level of the energy storage battery 11 exceeds the charging level threshold, the energy storage battery 11 has an overcharge risk.

For example, when the SOC of the energy storage battery 11 is used to represent the battery level of the energy storage battery 11, the charging level threshold may also be represented by using a second SOC threshold. To be specific, when the SOC of the energy storage battery 11 is not less than the second SOC threshold, it indicates that the battery level of the energy storage battery 11 is not less than the charging level threshold.

For another example, when the battery voltage of the energy storage battery 11 is used to represent the battery level of the energy storage battery 11, the charging level threshold may also be represented by using a second battery voltage threshold. To be specific, when the battery voltage of the energy storage battery 11 is not less than the second battery voltage threshold, it indicates that the battery level of the energy storage battery 11 is not less than the charging level threshold.

It may be understood that there are the following two cases with respect to a relative value relationship between the battery level of the energy storage battery 11 and the charging level threshold.

Case 1: The battery level of the energy storage battery 11 is less than the charging level threshold. In this case, the DC-DC converter 14 may charge the energy storage battery 11. For example, when the output power of the photovoltaic panel 13 is relatively high, the DC-DC converter 14 may provide redundant photovoltaic electric energy to charge the energy storage battery 11.

Case 2: The battery level of the energy storage battery 11 is not less than (greater than or equal to) the charging level threshold. In this case, the DC-DC converter 14 may stop charging the energy storage battery 11, to prevent overcharge of the energy storage battery 11. In addition, when the output power of the photovoltaic panel 13 is relatively low, the DC-DC converter 14 controls discharging of the energy storage battery 11.

It should be noted that, in a process of discharging the energy storage battery 11, the DC-DC converter 14 may obtain a discharging current output by the energy storage battery 11, to monitor a discharging status of the energy storage battery 11. In the discharging process, when the battery level of the energy storage battery 11 is not less than the charging level threshold, it is possible that the output power of the photovoltaic panel 13 is slightly less than the power required by the AC power grid 20. In this case, the energy storage battery 11 is discharged with a small current, that is, the discharging current is relatively small. A slight change of the output power of the photovoltaic panel 13 may cause the output power of the photovoltaic panel 13 to be slightly greater than the power required by the AC power grid 20, and the energy storage battery 11 switches from the discharging state to the charging state of low-current charging.

Due to a detection error of the charging current and the discharging current, the DC-DC converter 14 may not be able to identify that the energy storage battery 11 has switched from the low-current discharging state to the low-current charging state. When the battery level of the energy storage battery 11 is not less than the charging level threshold, if the energy storage battery 11 still continues to be charged with a low charging current, the energy storage battery 11 may be overcharged.

In view of this, the DC-DC converter 14 may further obtain the discharging current of the energy storage battery 11. It should be noted that a specific implementation in which the DC-DC converter 14 obtains the discharging current is not limited in this embodiment of this application. For example, a detection circuit is disposed in the DC-DC converter 14, and the DC-DC converter 14 may detect the discharging current by using the detection circuit. For another example, the energy storage battery 11 may send a discharging current indication message to the DC-DC converter 14, where the discharging current indication message may indicate a value of the discharging current. The DC-DC converter 14 may obtain the discharging current of the energy storage battery 11 based on the discharging current indication message.

For example, in S403, when the battery level is not less than the charging level threshold and the discharging current of the energy storage battery 11 is less than a discharging current threshold, the battery is controlled to stop charging and discharging. For example, the discharging current threshold may be a minimum value of the discharging current that can be detected by the DC-DC converter 14. For example, if detection precision of the DC-DC converter 14 is 0.1 A, the minimum value of the discharging current that can be detected by the DC-DC converter 14 is 0.1 A, and the discharging current threshold may be set to 0.1 A.

It may be understood that a specific implementation of the discharging current threshold is not limited in this embodiment of this application. For example, to further prevent overcharge of the energy storage battery 11, a margin of 0.05 A may be added on a basis that the minimum value of the discharging current that can be detected by the DC-DC converter 14 is 0.1 A, that is, the discharging current threshold is set to 0.15 A.

When the battery level is not less than the charging level threshold, and the discharging current of the energy storage battery 11 is less than the discharging current threshold, it indicates that the energy storage battery 11 has a risk of charging with a low current in this case. Therefore, to prevent overcharge of the energy storage battery 11, the DC-DC converter 14 stops charging and discharging the energy storage battery 11, that is, PWM wave sealing is performed.

In summary, in this embodiment of this application, the DC-DC converter may detect the battery level, the charging current, and the discharging current of the energy storage battery 11, and stop charging and discharging the energy storage battery 11 when the energy storage battery 11 has an overdischarge or overcharge risk, thereby helping protect the energy storage battery 11.

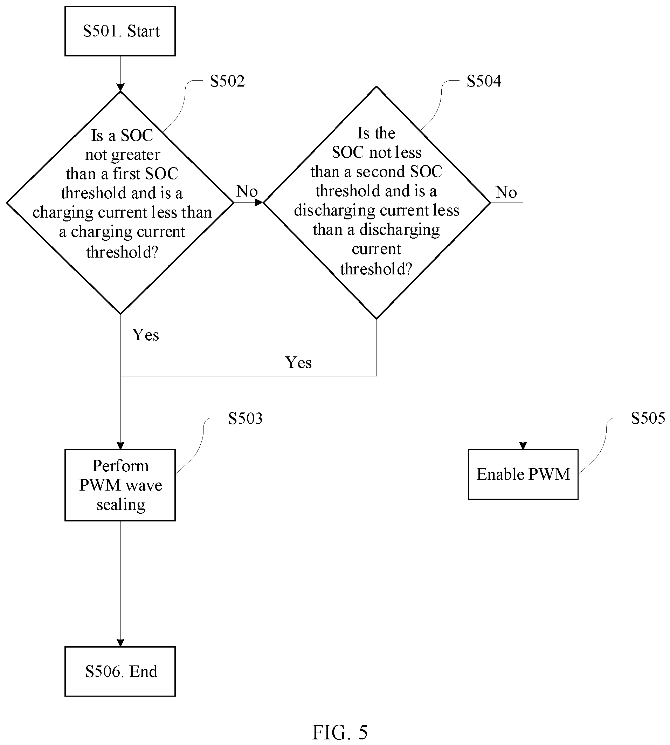

In a specific example, when a SOC of an energy storage battery 11 is used to represent a battery level of the energy storage battery 11, a DC-DC converter 14 may perform the following steps shown in FIG. 5.

S501. Start.

S502. A DC-DC converter 14 determines whether a current situation is "a SOC of an energy storage battery 11 is not greater than a first SOC threshold and a charging current is less than a charging current threshold". If yes, the DC-DC converter 14 continues to perform S603. If no, the DC-DC converter 14 continues to perform S604.

S503. The DC-DC converter 14 performs PWM wave sealing.

S504. The DC-DC converter 14 determines whether the current situation is "the SOC of the energy storage battery 11 is not less than a second SOC threshold, and a discharging current is less than a discharging current threshold". If yes, the DC-DC converter 14 continues to perform S603. If no, the DC-DC converter 14 continues to perform S605.

S505. The DC-DC converter 14 enables PWM.

S506. End.

Next, a charging and discharging control method provided in an embodiment of this application is further described by using the following example.

### Example 1: overdischarge prevention

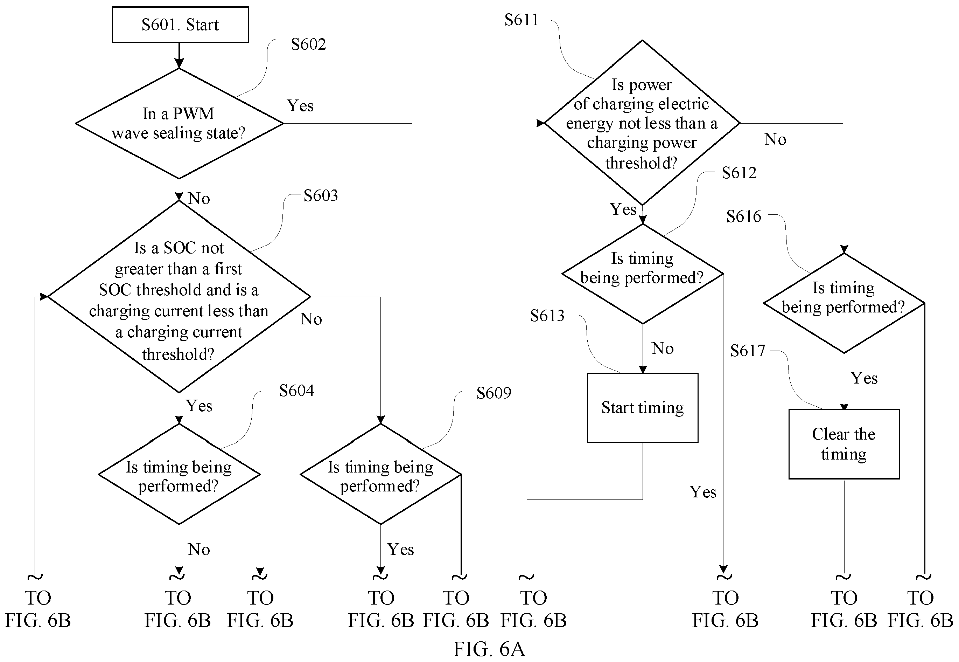

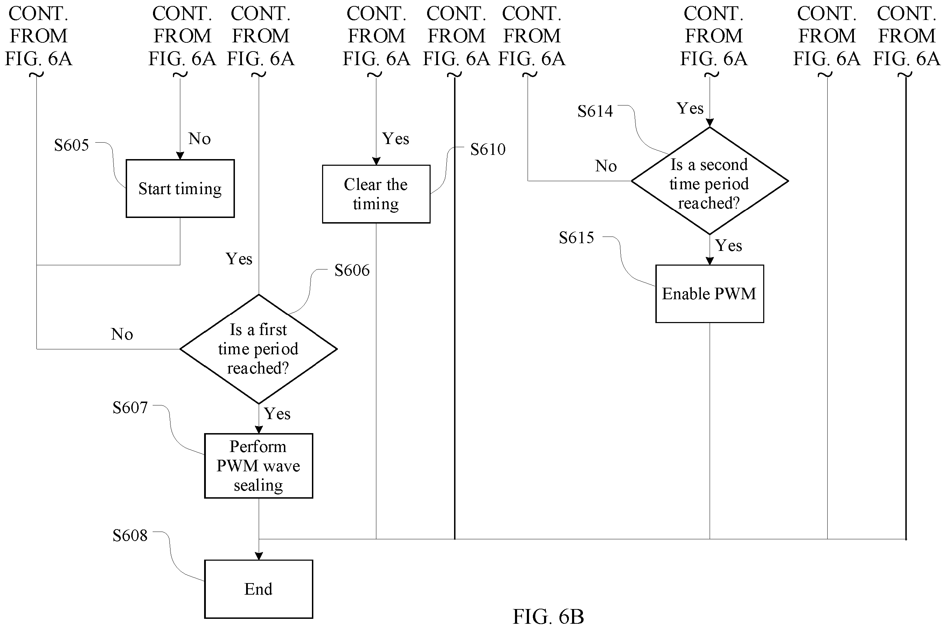

FIG. 6A and FIG. 6B are a schematic flowchart of a charging and discharging control method according to an embodiment of this application. As shown in FIG. 6A and FIG. 6B, the method mainly includes the following steps.

S601. Start.

S602. A DC-DC converter 14 determines whether the DC-DC converter 14 is currently in a PWM wave sealing state. If yes, it indicates that an energy storage battery 11 is neither charged nor discharged, and the DC-DC converter 14 continues to perform S611. If no, it indicates that the energy storage battery 11 can be charged and/or discharged currently, and the DC-DC converter 14 continues to perform S603.

S603. The DC-DC converter 14 determines whether a current situation is "a SOC of the energy storage battery 11 is not greater than a first SOC threshold and a charging current is less than a charging current threshold". If yes, the DC-DC converter 14 continues to perform S604. If no, the DC-DC converter 14 continues to perform S609.

S604. When determining that the SOC of the energy storage battery 11 is not greater than the first SOC threshold and that the charging current is less than the charging current threshold, the DC-DC converter 14 continues to determine whether timing is being performed currently. If yes, the DC-DC converter 14 continues to perform S605. If no, the DC-DC converter 14 continues to perform S606.

S605. The DC-DC converter 14 starts timing of a first time period, and returns to continue to perform S603.

S606. The DC-DC converter 14 determines whether a current timing duration reaches the first time period. If yes, the DC-DC converter 14 continues to perform S607. If no, the DC-DC converter 14 returns to continue to perform S603.

S607. The DC-DC converter 14 performs PWM wave sealing. In other words, the DC-DC converter 14 controls the energy storage battery 11 to stop charging and discharging.

S608. End.

S609. When the DC-DC converter 14 determines that the current situation is not "the SOC of the energy storage battery 11 is not greater than the first SOC threshold and the charging current is less than the charging current threshold", if timing of the first time period is being performed, the DC-DC converter 14 performs S610 to clear the current timing. Otherwise, S608 is performed.

It can be learned from steps S604 to S610 that, in this embodiment of this application, a latency of the first time period may be further set for a PWM wave sealing operation. To be specific, when the energy storage battery 11 continuously meets "the SOC of the energy storage battery 11 is not greater than the first SOC threshold and the charging current is less than the charging current threshold" in the first time period, the DC-DC converter 14 controls the energy storage battery 11 to stop charging and discharging. In this implementation, the DC-DC converter 14 can be prevented from frequently changing a PWM policy due to interference factors such as a system energy fluctuation and a detection error.

If the energy storage battery 11 no longer meets "the SOC of the energy storage battery 11 is not greater than the first SOC threshold and the charging current is less than the charging current threshold" in the first time period, the DC-DC converter 14 clears the timing of the first time period. In this case, if the SOC of the energy storage battery 11 is not greater than the first SOC threshold and the charging current is greater than the charging current threshold, the DC-DC converter 14 can control only charging of the energy storage battery 11, but cannot control discharging of the energy storage battery 11. If the SOC of the energy storage battery 11 is less than the first SOC threshold, the DC-DC converter 14 can control not only charging of the energy storage battery 11, but also discharging of the energy storage battery 11.

It should be noted that, by using the charging and discharging control method provided in this embodiment of this application, the DC-DC converter 14 may further automatically control charging of the energy storage battery 11 when the energy storage battery 11 can be safely charged. Specifically, as shown in S602 in FIG. 6A, when the DC-DC converter 14 determines whether the DC-DC converter 14 is currently in the PWM wave sealing state, the DC-DC converter 14 continues to perform S611: determining whether power of charging electric energy is not less than a charging power threshold.

In this embodiment of this application, the charging power threshold is greater than or equal to a product of a first battery voltage threshold and the charging current threshold. As described above, when a battery voltage of the energy storage battery 11 is less than or equal to the first battery voltage threshold, it indicates that a battery level of the energy storage battery 11 is less than or equal to a discharging level threshold, and the energy storage battery 11 stops discharging. In other words, when the battery level of the energy storage battery 11 is less than or equal to the discharging level threshold, the battery voltage of the energy storage battery 11 may reach the first battery voltage threshold.

Because the charging power threshold is greater than or equal to the product of the first battery voltage threshold and the charging current threshold, and the battery voltage is the first battery voltage threshold, when the battery level of the energy storage battery 11 is less than or equal to the discharging level threshold, the energy storage battery 11 is charged with charging power equal to the charging power threshold, and this helps ensure that the charging current is greater than or equal to the charging current threshold.

For example, the DC-DC converter 14 may determine, by communicating and interacting with a photovoltaic inverter 12, power of charging electric energy that can be received by a second end of the DC-DC converter 14. For example, when photovoltaic electric energy output by a photovoltaic panel 13 is relatively large, the photovoltaic inverter 12 may send a first power indication message to the energy storage battery 11, and indicate, by using the first power indication message, power of charging electric energy that can be received by the second end of the DC-DC converter 14, that is, a difference obtained by subtracting electric energy required by an AC power grid 20 from the photovoltaic electric energy output by the photovoltaic panel 13.

For another example, when the photovoltaic inverter 12 provides charging electric energy for the DC-DC converter 14, the photovoltaic inverter 12 may send a second power indication message to the energy storage battery 11, and indicate, by using the second power indication message, power of charging electric energy that can be received by the second end of the DC-DC converter 14, that is, power of charging electric energy output by the photovoltaic inverter 12.

If the power of the charging electric energy is not less than the charging power threshold, it indicates that the energy storage battery 11 can be safely charged in this case, and the DC-DC converter 14 can enable PWM. Enabling PWM may be understood as controlling, by using PWM, a power conversion circuit to perform voltage conversion.

It should be noted that because the DC-DC converter 14 currently detects the SOC of the energy storage battery 11 mainly through estimation, a detection error of the SOC is relatively large. Therefore, an actual SOC may be greater than the first SOC threshold, but the DC-DC converter 14 performs PWM wave sealing due to a detection error. In view of this, when performing S611, the DC-DC converter 14 may further continue to detect the SOC of the energy storage battery 11. If the SOC of the energy storage battery 11 is greater than the first SOC threshold, the DC-DC converter 14 may enable PWM.

In a possible implementation, to prevent the DC-DC converter 14 from frequently switching between the PWM wave sealing state and a PWM enabling state, the DC-DC converter 14 may alternatively enable PWM when determining that the power of the charging electric energy is continuously not less than the charging power threshold in a second time period.

As shown in S611 in FIG. 6A, if the power of the charging electric energy is not less than the charging power threshold, the DC-DC converter 14 continues to perform S612. Otherwise, the DC-DC converter 14 continues to perform S616.

S612. Determine whether timing of the second time period is being performed currently. If yes, the DC-DC converter 14 continues to perform S612. If no, the DC-DC converter 14 continues to perform S614.

S613. Start timing.

S614. Determine whether timing duration reaches the second time period. If yes, the DC-DC converter 14 continues to perform S615. If no, the DC-DC converter 14 returns to perform S611.

S615. Enable PWM.

S616. If the power of the charging electric energy is less than the charging power threshold, determine whether timing of the second time period is being performed currently. If yes, the DC-DC converter 14 continues to perform S617. Otherwise, the DC-DC converter 14 continues to perform S608.

S617. Clear the timing of the second time period.

It can be learned from S612 to S617 that, if the power of the charging electric energy is less than the charging power threshold at least once in the second time period, the DC-DC converter 14 does not enable PWM. If the power of the charging electric energy is continuously not less than the charging power threshold in the second time period, it indicates that the power of the charging electric energy can stably charge the energy storage battery 11 currently. Therefore, PWM can be enabled.

### Example 2: overcharge prevention

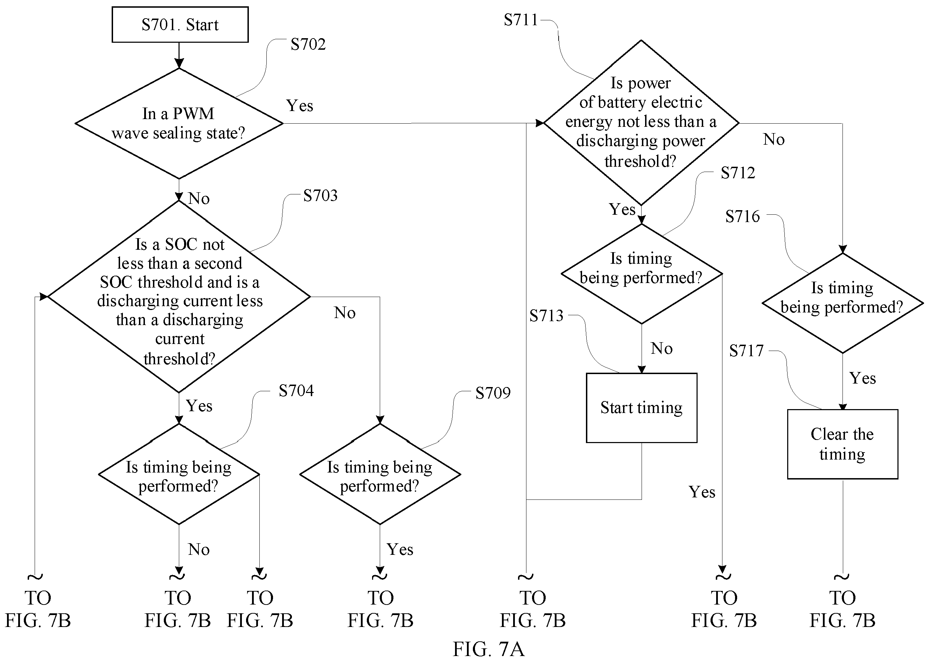

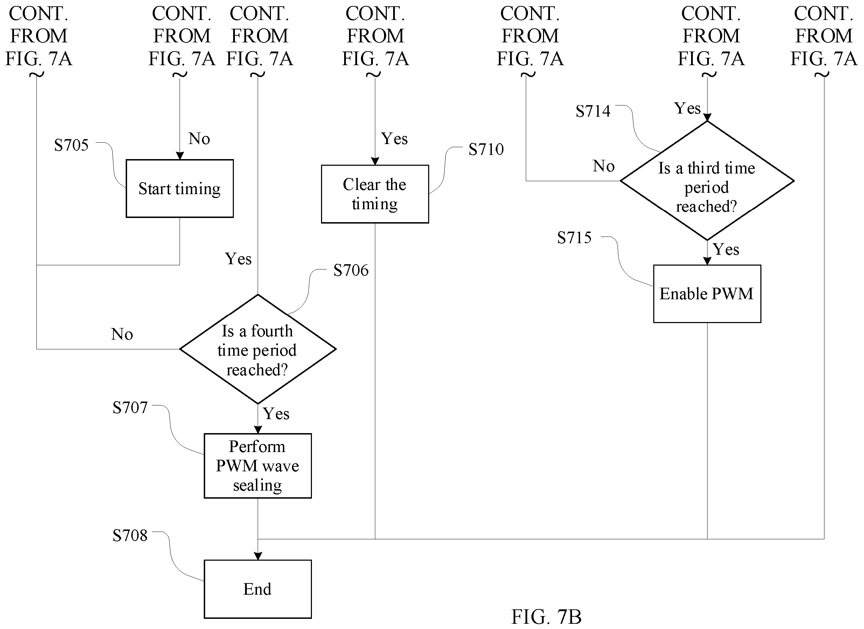

FIG. 7A and FIG. 7B are a schematic flowchart of a charging and discharging control method according to an embodiment of this application. As shown in FIG. 7A and FIG. 7B, the method mainly includes the following steps.

S701. Start.

S702. A DC-DC converter 14 determines whether the DC-DC converter 14 is currently in a PWM wave sealing state. If yes, it indicates that an energy storage battery 11 is neither charged nor discharged, and the DC-DC converter 14 continues to perform S711. If no, it indicates that the energy storage battery 11 can be charged and/or discharged currently, and the DC-DC converter 14 continues to perform S703.

S703. The DC-DC converter 14 determines whether a current situation is "a SOC of the energy storage battery 11 is not less than a second SOC threshold and a discharging current is less than a discharging current threshold". If yes, the DC-DC converter 14 continues to perform S704. If no, the DC-DC converter 14 continues to perform S709.

S704. When determining that the SOC of the energy storage battery 11 is not less than the second SOC threshold and that the discharging current is less than the discharging current threshold, the DC-DC converter 14 continues to determine whether timing is being performed currently. If yes, the DC-DC converter 14 continues to perform S705. If no, the DC-DC converter 14 continues to perform S706.

S705. The DC-DC converter 14 starts timing of a fourth time period, and returns to continue to perform S703.

S706. The DC-DC converter 14 determines whether a current timing duration reaches the fourth time period. If yes, the DC-DC converter 14 continues to perform S707. If no, the DC-DC converter 14 returns to continue to perform S703.

S707. The DC-DC converter 14 performs PWM wave sealing. In other words, the DC-DC converter 14 controls the energy storage battery 11 to stop charging and discharging.

S708. End.

S709. When the DC-DC converter 14 determines that the current situation is not "the SOC of the energy storage battery 11 is not less than the second SOC threshold and the discharging current is less than the discharging current threshold", if timing of the fourth time period is being performed, the DC-DC converter 14 performs S710 to clear the current timing. Otherwise, S708 is performed.

It can be learned from steps S704 to S710 that, in this embodiment of this application, a latency of the fourth time period may be further set for a PWM wave sealing operation. To be specific, when the energy storage battery 11 continuously meets "the SOC of the energy storage battery 11 is not less than the second SOC threshold and the discharging current is less than the discharging current threshold" in the fourth time period, the DC-DC converter 14 controls the energy storage battery 11 to stop charging and discharging. In this implementation, the DC-DC converter 14 can be prevented from frequently changing a PWM policy due to interference factors such as a system energy fluctuation and a detection error.

If the energy storage battery 11 no longer meets "the SOC of the energy storage battery 11 is not less than the second SOC threshold and the discharging current is less than the discharging current threshold" in the forth time period, the DC-DC converter 14 clears the timing of the fourth time period. In this case, if the SOC of the energy storage battery 11 is not less than the second SOC threshold and the discharging current is greater than the discharging current threshold, the DC-DC converter 14 can control only discharging of the energy storage battery 11, but cannot control charging of the energy storage battery 11. If the SOC of the energy storage battery 11 is less than the second SOC threshold, the DC-DC converter 14 can control not only charging of the energy storage battery 11, but also discharging of the energy storage battery 11.

It should be noted that, by using the charging and discharging control method provided in this embodiment of this application, the DC-DC converter 14 may further automatically control discharging of the energy storage battery 11 when the energy storage battery 11 can be safely discharged. Specifically, as shown in S702 in FIG. 7A, when the DC-DC converter 14 determines whether the DC-DC converter 14 is currently in the PWM wave sealing state, the DC-DC converter 14 continues to perform S711: determining whether power of battery electric energy is not less than a discharging power threshold.

In this embodiment of this application, the discharging power threshold is greater than or equal to a product of a second battery voltage threshold and the discharging current threshold. As described above, when a battery voltage of the energy storage battery 11 is greater than or equal to the second battery voltage threshold, it indicates that a battery level of the energy storage battery 11 is greater than or equal to a charging level threshold, and the energy storage battery 11 stops charging. In other words, when the battery level of the energy storage battery 11 is greater than or equal to the charging level threshold, the battery voltage of the energy storage battery 11 may reach the second battery voltage threshold.

Because the discharging power threshold is greater than or equal to the product of the second battery voltage threshold and the discharging current threshold, and the battery voltage is the second battery voltage threshold, when the battery level of the energy storage battery 11 is greater than or equal to the charging level threshold, the energy storage battery is discharged with discharging power equal to the discharging power threshold, and this helps ensure that the discharging current is greater than or equal to the discharging current threshold.

For example, the DC-DC converter 14 may determine, by communicating and interacting with a photovoltaic inverter 12, power of battery electric energy that needs to be output by the energy storage battery 11. For example, when photovoltaic electric energy output by a photovoltaic panel 13 is relatively low, the photovoltaic inverter 12 may send a third power indication message to the energy storage battery 11, and indicate, by using the third power indication message, power of battery electric energy that needs to be output by the energy storage battery 11, that is, a power gap of photovoltaic electric energy output by the photovoltaic panel 13 relative to electric energy required by an AC power grid 20.

If the power of the electric energy of the battery is not less than the discharging power threshold, it indicates that the energy storage battery 11 can be discharged safely in this case, and the DC-DC converter 14 can enable PWM. It should be noted that because a detection error of the SOC is relatively large currently, when performing S711, the DC-DC converter 14 may further continue to detect the SOC of the energy storage battery 11. If the SOC of the energy storage battery 11 is less than the second SOC threshold, the DC-DC converter 14 may enable PWM.

In a possible implementation, to prevent the DC-DC converter 14 from frequently switching between the PWM wave sealing state and a PWM enabling state, the DC-DC converter 14 may alternatively enable PWM when determining that the power of the battery electric energy is continuously not less than the discharging power threshold in a third time period.

As shown in S711 in FIG. 7A, if the power of the battery electric energy is not less than the discharging power threshold, the DC-DC converter 14 continues to perform S712. Otherwise, the DC-DC converter 14 continues to perform S716.

S712. Determine whether timing of the third time period is being performed currently. If yes, the DC-DC converter 14 continues to perform S712. If no, the DC-DC converter 14 continues to perform S714.

S713. Start timing.

S714. Determine whether timing duration reaches the third time period. If yes, the DC-DC converter 14 continues to perform S715. If no, the DC-DC converter 14 returns to perform S711.

S715. Enable PWM.

S716. If power of battery electric energy is less than a charging power threshold, determine whether timing of the third time period is being performed currently. If yes, the DC-DC converter 14 continues to perform S717. Otherwise, the DC-DC converter 14 continues to perform S708.

S717. Clear the timing of the third time period.

It can be learned from S712 to S717 that, if the power of the battery electric energy is less than the discharging power threshold at least once in the third time period, the DC-DC converter 14 does not enable PWM. If the power of the battery electric energy is continuously not less than the discharging power threshold in the third time period, it indicates that the energy storage battery 11 can stably output the battery electric energy currently. Therefore, PWM can be enabled.

Example 3: current detection

A DC-DC converter 14 may obtain current values of a charging current and a discharging current. In a possible implementation, the DC-DC converter 14 may include a detection circuit, and the detection circuit detects the current values of the charging current and the discharging current. In another possible implementation, the DC-DC converter 14 may obtain the current values of the charging current and the discharging current by communicating and interacting with an energy storage battery 11.

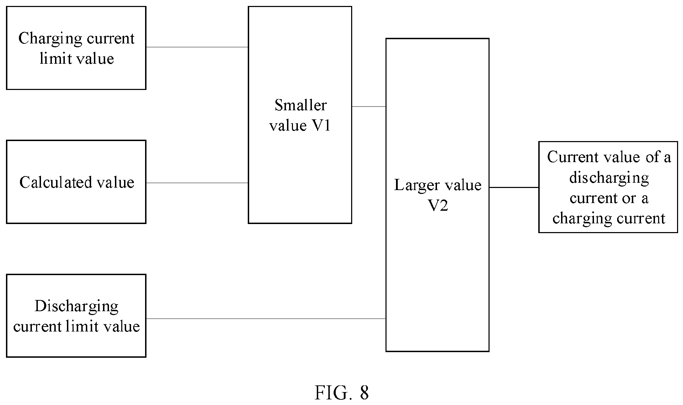

In still another possible implementation, the DC-DC converter 14 may further reuse a bus loop circuit to determine the current values of the charging current and the discharging current. Specifically, the bus loop circuit may adjust the current value of the charging current or the discharging current, so that a bus voltage (that is, a voltage at a second end of the DC-DC converter 14) remains stable. It is assumed that the current value of the charging current is a positive value and that the current value of the discharging current is a negative value. In this case, a process in which the bus loop circuit adjusts the value of the charging current or the discharging current may be shown in FIG. 8.

The bus loop circuit obtains a calculated value based on the current bus voltage. When the bus voltage exceeds a working range of the bus voltage, the bus loop circuit increases the calculated value, so that the bus voltage decreases. When the bus voltage is lower than the working range of the bus voltage, the bus loop circuit decreases the calculated value, so that the bus voltage increases.

The bus loop circuit determines a charging current limit value based on a current SOC. Generally, if the SOC is larger, the charging current limit value is smaller, and the charging current limit value may be understood as a maximum value that can be reached by the charging current. The bus loop circuit further determines a smaller value V1 of the charging current limit value and the calculated value, to prevent the charging current from exceeding the charging current limit value.

The bus loop circuit determines a discharging current limit value based on the current SOC. Generally, if the SOC is smaller, the discharging current limit value is smaller, and the discharging current limit value may be understood as a maximum discharging current that can be output by the energy storage battery 11. Because the current value of the discharging current is negative, the discharging current limit value may also be understood as a minimum current value that can be reached by the discharging current.

The bus loop circuit further determines a larger value V2 of the discharging current limit value and the smaller value V1, to prevent an absolute value of the current value of the discharging current from exceeding an absolute value of the discharging current limit value. In this implementation, a system sampling error can be avoided. Therefore, a relatively accurate current value of the charging current or the discharging current can be obtained.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various changes and variations to this application without departing from the protection scope of this application. Therefore, this application is also intended to cover the changes and variations provided that the changes and variations of this application fall within the scope of the claims of this application.

## Claims

1. An energy system, comprising an energy storage battery and a charging and discharging control apparatus, wherein the charging and discharging control apparatus is connected to the energy storage battery, and the charging and discharging control apparatus is configured to:
obtain a battery level of the energy storage battery, and obtain a charging current of the energy storage battery or a discharging current of the energy storage battery;
when the battery level is not greater than a discharging level threshold and the charging current of the energy storage battery is less than a charging current threshold, control the energy storage battery to stop charging and discharging; and
when the battery level is not less than a charging level threshold and the discharging current of the energy storage battery is less than a discharging current threshold, control the energy storage battery to stop charging and discharging.

2. The energy system according to claim 1, wherein the charging and discharging control apparatus is further configured to:
when the battery level is not greater than the discharging level threshold and power of charging electric energy received by the charging and discharging control apparatus is not less than a charging power threshold, control charging of the energy storage battery by using the charging electric energy.

3. The energy system according to claim 1, wherein the charging and discharging control apparatus is further configured to:
in a second time period, when the battery level is continuously not greater than the discharging level threshold and power of charging electric energy received by the charging and discharging control apparatus is continuously not less than a charging power threshold, control charging of the energy storage battery by using the charging electric energy.

4. The energy system according to claim 2 or 3, wherein the charging and discharging control apparatus is further configured to connect to an AC power grid, and the charging electric energy comprises AC electric energy received by the charging and discharging control apparatus from the AC power grid; and
the charging and discharging control apparatus is specifically configured to:
perform AC to DC conversion on the received charging electric energy, to obtain DC charging electric energy; and
output the DC charging electric energy obtained through conversion to the energy storage battery.

5. The energy system according to claim 2 or 3, wherein the energy system further comprises a photovoltaic panel, the photovoltaic panel is connected to the charging and discharging control apparatus, and the photovoltaic panel is configured to convert received photon energy into DC photovoltaic electric energy; and
the charging and discharging control apparatus is specifically configured to:
perform DC to AC conversion on a part of photovoltaic electric energy output by the photovoltaic panel, output AC electric energy obtained through conversion to an AC power grid, and output another part of photovoltaic electric energy output by the photovoltaic panel, to the energy storage battery as the charging electric energy.

6. The energy system according to claim 2 or 3, wherein the energy system further comprises a photovoltaic panel, the photovoltaic panel is configured to convert received photon energy into DC photovoltaic electric energy, and the charging electric energy comprises a part or all of photovoltaic electric energy output by the photovoltaic panel; and/or
the energy system further comprises a photovoltaic inverter, wherein the photovoltaic inverter is configured to convert AC electric energy received from an AC power grid into DC power grid electric energy, and the charging electric energy comprises the power grid electric energy; and
the charging and discharging control apparatus is specifically configured to:
perform DC to DC conversion on the charging electric energy, so that a voltage of the converted charging electric energy adapts to the energy storage battery; and
output the converted charging electric energy to the energy storage battery.

7. The energy system according to any one of claims 1 to 6, wherein the charging and discharging control apparatus is specifically configured to:
in a first time period, when the battery level is continuously not greater than the discharging level threshold and the charging current of the energy storage battery is continuously less than the charging current threshold, control the energy storage battery to stop charging and discharging.

8. The energy system according to any one of claims 1 to 7, wherein the charging and discharging control apparatus is further configured to:
when the battery level is not less than the charging level threshold and power of battery electric energy is not less than a discharging power threshold, control discharging of the energy storage battery.

9. The energy system according to any one of claims 1 to 7, wherein the charging and discharging control apparatus is further configured to:
in a third time period, when the battery level is continuously not less than the charging level threshold and power of battery electric energy is continuously not less than a discharging power threshold control discharging of the energy storage battery.

10. The energy system according to claim 8 or 9, wherein the energy system further comprises the photovoltaic panel and the photovoltaic inverter, and the photovoltaic inverter is connected to the photovoltaic panel and the charging and discharging control apparatus separately;
the photovoltaic panel is configured to convert received photon energy into DC photovoltaic electric energy;
the charging and discharging control apparatus is specifically configured to:
when power of the photovoltaic electric energy is less than target power of the AC power grid, perform DC to DC conversion on the received battery electric energy, so that the converted battery electric energy adapts to the photovoltaic inverter, wherein the power of the battery electric energy is equal to a difference obtained by subtracting the power of the photovoltaic electric energy from the target power; and
the photovoltaic inverter is configured to perform DC to AC conversion on the received photovoltaic electric energy and/or battery electric energy, and output AC electric energy obtained through conversion to the AC power grid.

11. The energy system according to any one of claims 1 to 10, wherein the charging and discharging control apparatus is specifically configured to:
in a fourth time period, when the battery level is continuously not less than the charging level threshold and the discharging current of the energy storage battery is continuously less than the discharging current threshold, control the energy storage battery to stop charging and discharging.

12. A charging and discharging control method, applied to a charging and discharging control apparatus for controlling charging and discharging of an energy storage battery in an energy system, wherein the method comprises:
obtaining, by the charging and discharging control apparatus, a battery level of the energy storage battery, and obtaining a charging current of the energy storage battery or a discharging current of the energy storage battery;
when the battery level is not greater than a discharging level threshold and the charging current of the energy storage battery is less than a charging current threshold, controlling, by the charging and discharging control apparatus, the energy storage battery to stop charging and discharging; and
when the battery level is not less than a charging level threshold and the discharging current of the energy storage battery is less than a discharging current threshold, controlling, by the charging and discharging control apparatus, the energy storage battery to stop charging and discharging.

13. The method according to claim 12, wherein after the controlling, by the charging and discharging control apparatus, the energy storage battery to stop charging and discharging when the battery level is not greater than a discharging level threshold and the charging current of the energy storage battery is less than a charging current threshold, the method further comprises:
when the battery level is not greater than the discharging level threshold and power of charging electric energy received by the charging and discharging control apparatus is not less than a charging power threshold, controlling, by the charging and discharging control apparatus, charging of the energy storage battery by using the charging electric energy.

14. The method according to claim 12, wherein after the controlling, by the charging and discharging control apparatus, the energy storage battery to stop charging and discharging when the battery level is not greater than a discharging level threshold and the charging current of the energy storage battery is less than a charging current threshold, the method further comprises:
in a second time period, when the battery level is continuously not greater than the discharging level threshold and power of charging electric energy received by the charging and discharging control apparatus is continuously not less than a charging power threshold, controlling, by the charging and discharging control apparatus, charging of the energy storage battery by using the charging electric energy.

15. The method according to any one of claims 12 to **14,** wherein the controlling, by the charging and discharging control apparatus, the energy storage battery to stop charging and discharging when the battery level is not greater than a discharging level threshold and the charging current of the energy storage battery is less than a charging current threshold comprises:
in a first time period, when the battery level is continuously not greater than the discharging level threshold and the charging current of the energy storage battery is continuously less than the charging current threshold, controlling, by the charging and discharging control apparatus, the energy storage battery to stop charging and discharging.

## Patentansprüche

1. Energiesystem, umfassend eine Energiespeicherbatterie und eine Lade- und Entladesteuerungsvorrichtung, wobei die Lade- und Entladesteuerungsvorrichtung mit der Energiespeicherbatterie verbunden ist und die Lade- und Entladesteuerungsvorrichtung zu Folgendem konfiguriert ist:
Erlangen eines Batteriepegels der Energiespeicherbatterie und Erlangen eines Ladestroms der Energiespeicherbatterie oder eines Entladestroms der Energiespeicherbatterie;
wenn der Batteriepegel nicht größer als ein Entladepegelschwellenwert ist und der Ladestrom der Energiespeicherbatterie kleiner als ein Ladestromschwellenwert ist, Steuern der Energiespeicherbatterie, um Laden und Entladen zu stoppen; und
wenn der Batteriepegel nicht kleiner als ein Ladepegelschwellenwert ist und der Entladestrom der Energiespeicherbatterie kleiner als ein Entladestromschwellenwert ist, Steuern der Energiespeicherbatterie, um das Laden und Entladen zu stoppen.

2. Energiesystem nach Anspruch 1, wobei die Lade- und Entladesteuerungsvorrichtung ferner zu Folgendem konfiguriert ist:
wenn der Batteriepegel nicht größer als der Entladepegelschwellenwert ist und eine Leistung elektrischer Ladeenergie, die durch die Lade- und Entladesteuerungsvorrichtung empfangen wird,
nicht kleiner als ein Ladeleistungsschwellenwert ist, Steuern des Ladens der Energiespeicherbatterie unter Verwendung der elektrischen Ladeenergie.

3. Energiesystem nach Anspruch 1, wobei die Lade- und Entladesteuerungsvorrichtung ferner zu Folgendem konfiguriert ist:
in einem zweiten Zeitraum, wenn der Batteriepegel andauernd nicht größer als der Entladepegelschwellenwert ist und eine Leistung elektrischer Ladeenergie, die durch die Lade- und Entladesteuerungsvorrichtung empfangen wird, andauernd nicht kleiner als ein Ladeleistungsschwellenwert ist, Steuern des Ladens der Energiespeicherbatterie unter Verwendung der elektrischen Ladeenergie.

4. Energiesystem nach Anspruch 2 oder 3, wobei die Lade- und Entladesteuerungsvorrichtung ferner dazu konfiguriert ist, sich mit einem AC-Leistungsnetz zu verbinden, und die elektrische Ladeenergie elektrische AC-Energie umfasst, die durch die Lade- und Entladesteuerungsvorrichtung von dem AC-Leistungsnetz empfangen wird; und
die Lade- und Entladesteuerungsvorrichtung speziell zu Folgendem konfiguriert ist:
Durchführen einer AC-zu-DC-Umwandlung an der empfangenen elektrischen Ladeenergie, um elektrische DC-Ladeenergie zu erlangen; und
Ausgeben der elektrischen DC-Ladeenergie, die durch die Umwandlung erlangt wird, an die Energiespeicherbatterie.

5. Energiesystem nach Anspruch 2 oder 3, wobei das Energiesystem ferner ein Photovoltaikmodul umfasst, das Photovoltaikmodul mit der Lade- und Entladesteuerungsvorrichtung verbunden ist und das Photovoltaikmodul dazu konfiguriert ist, empfangene Photonenenergie in elektrische DC-Photovoltaikenergie umzuwandeln; und die Lade- und Entladesteuerungsvorrichtung speziell zu Folgendem konfiguriert ist:
Durchführen einer DC-zu-AC-Umwandlung an einem Teil elektrischer Photovoltaikenergie, die durch das Photovoltaikmodul ausgegeben wird, Ausgeben elektrischer AC-Energie, die durch die Umwandlung erlangt wird, an ein AC-Leistungsnetz und Ausgeben eines anderen Teiles der elektrischen Photovoltaikenergie, die durch das Photovoltaikmodul ausgegeben wird, an die Energiespeicherbatterie als die elektrische Ladeenergie.

6. Energiesystem nach Anspruch 2 oder 3, wobei das Energiesystem ferner ein Photovoltaikmodul umfasst, das Photovoltaikmodul dazu konfiguriert ist, empfangene Photonenenergie in elektrische DC-Photovoltaikenergie umzuwandeln, und die elektrische Ladeenergie einen Teil der oder alle Photovoltaikenergie umfasst, die durch das Photovoltaikmodul ausgegeben wird; und/oder das Energiesystem ferner einen Photovoltaikwechselrichter umfasst, wobei der Photovoltaikwechselrichter dazu konfiguriert ist, elektrische AC-Energie, die von einem AC-Leistungsnetz empfangen wird, in elektrische DC-Leistungsnetzenergie umzuwandeln, und die elektrische Ladeenergie die elektrische Leistungsnetzenergie umfasst; und
die Lade- und Entladesteuerungsvorrichtung speziell zu Folgendem konfiguriert ist:
Durchführen einer DC-zu-DC-Umwandlung an der elektrischen Ladeenergie, sodass sich eine Spannung der umgewandelten elektrischen Ladeenergie an die Energiespeicherbatterie anpasst; und
Ausgeben der umgewandelten elektrischen Ladeenergie an die Energiespeicherbatterie.

7. Energiesystem nach einem der Ansprüche 1 bis 6, wobei die Lade- und Entladesteuerungsvorrichtung speziell zu Folgendem konfiguriert ist:
in einem ersten Zeitraum, wenn der Batteriepegel andauernd nicht größer als der Entladepegelschwellenwert ist und der Ladestrom der Energiespeicherbatterie andauernd kleiner als der Ladestromschwellenwert ist, Steuern der Energiespeicherbatterie, um das Laden und Entladen zu stoppen.

8. Energiespeichersystem nach einem der Ansprüche 1 bis 7, wobei die Lade- und Entladesteuerungsvorrichtung ferner zu Folgendem konfiguriert ist:
wenn der Batteriepegel nicht kleiner als der Ladepegelschwellenwert ist und die Leistung der elektrischen Ladeenergie nicht kleiner als ein Entladeleistungsschwellenwert ist, Steuern des Entladens der Energiespeicherbatterie.

9. Energiesystem nach einem der Ansprüche 1 bis 7, wobei die Lade- und Entladesteuerungsvorrichtung ferner zu Folgendem konfiguriert ist:
in einem dritten Zeitraum, wenn der Batteriepegel andauernd nicht kleiner als der Ladepegelschwellenwert ist und eine Leistung einer elektrischen Batterieenergie andauernd nicht kleiner als ein Entladeleistungsschwellenwert ist, Steuern des Entladens der Energiespeicherbatterie.

10. Energiesystem nach Anspruch 8 oder 9, wobei das Energiesystem ferner das Photovoltaikmodul und den Photovoltaikwechselrichter umfasst und der Photovoltaikwechselrichter separat mit dem Photovoltaikmodul und der Lade- und Entladesteuerungsvorrichtung verbunden ist;
das Photovoltaikmodul dazu konfiguriert ist, empfangene Photonenenergie in elektrische DC-Photovoltaikenergie umzuwandeln; die Lade- und Entladesteuerungsvorrichtung speziell zu Folgendem konfiguriert ist:
wenn eine Leistung der elektrischen Photovoltaikenergie kleiner als eine Zielleistung des AC-Leistungsnetzes ist, Durchführen einer DC-zu-DC-Umwandlung an der empfangenen elektrischen Batterieenergie, sodass sich die umgewandelte elektrische Batterieenergie an den Photovoltaikwechselrichter anpasst, wobei die Leistung der elektrischen Batterieenergie gleich einer Differenz ist, die durch Subtrahieren der Leistung der elektrischen Photovoltaikenergie von der Zielleistung erlangt wird; und
der Photovoltaikwechselrichter dazu konfiguriert ist, eine DC-zu-AC-Umwandlung an der empfangenen elektrischen Photovoltaikenergie und/oder der elektrischen Batterieenergie durchzuführen und elektrische AC-Energie, die durch die Umwandlung erlangt wird, an das AC-Leistungsnetz auszugeben.

11. Energiesystem nach einem der Ansprüche 1 bis 10, wobei die Lade- und Entladesteuerungsvorrichtung speziell zu Folgendem konfiguriert ist:
in einem vierten Zeitraum, wenn der Batteriepegel andauernd nicht kleiner als der Ladepegelschwellenwert ist und der Entladestrom der Energiespeicherbatterie andauernd kleiner als der Entladestromschwellenwert ist, Steuern der Energiespeicherbatterie, um das Laden und Entladen zu stoppen.

12. Lade- und Entladesteuerungsverfahren, das auf eine Lade- und Entladesteuerungsvorrichtung zum Steuern von Laden und Entladen einer Energiespeicherbatterie in einem Energiesystem angewandt wird, wobei das Verfahren Folgendes umfasst:
Erlangen, durch die Lade- und Entladesteuerungsvorrichtung, eines Batteriepegels der Energiespeicherbatterie und Erlangen eines Ladestroms der Energiespeicherbatterie oder eines Entladestroms der Energiespeicherbatterie;
wenn der Batteriepegel nicht größer als ein Entladepegelschwellenwert ist und der Ladestrom der Energiespeicherbatterie kleiner als ein Ladestromschwellenwert ist, Steuern, durch die Lade- und Entladesteuerungsvorrichtung. der Energiespeicherbatterie, um das Laden und Entladen zu stoppen; und
wenn der Batteriepegel nicht kleiner als ein Ladepegelschwellenwert ist und der Entladestrom der Energiespeicherbatterie kleiner als ein Entladestromschwellenwert ist, Steuern, durch die Lade- und Entladesteuerungsvorrichtung, der Energiespeicherbatterie, um das Laden und Entladen zu stoppen.

13. Verfahren nach Anspruch 12, wobei das Verfahren nach dem Steuern, durch die Lade- und Entladesteuerungsvorrichtung, der Energiespeicherbatterie, um das Laden und Entladen zu stoppen, wenn der Batteriepegel nicht größer als ein Entladepegelschwellenwert ist und der Ladestrom der Energiespeicherbatterie kleiner als ein Ladestromschwellenwert ist, ferner Folgendes umfasst:
wenn der Batteriepegel nicht größer als der Entladepegelschwellenwert ist und eine Leistung elektrischer Ladeenergie, die durch die Lade- und Entladesteuerungsvorrichtung empfangen wird, nicht kleiner als ein Ladeleistungsschwellenwert ist, Steuern, durch die Lade- und Entladesteuerungsvorrichtung, des Ladens der Energiespeicherbatterie unter Verwendung der elektrischen Ladeenergie.

14. Verfahren nach Anspruch 12, wobei das Verfahren nach dem Steuern, durch die Lade- und Entladesteuerungsvorrichtung, der Energiespeicherbatterie, um das Laden und Entladen zu stoppen, wenn der Batteriepegel nicht größer als ein Entladepegelschwellenwert ist und der Ladestrom der Energiespeicherbatterie kleiner als ein Ladestromschwellenwert ist, ferner Folgendes umfasst:
in einem zweiten Zeitraum, wenn der Batteriepegel andauernd nicht größer als der Entladepegelschwellenwert ist und die Leistung der elektrischen Ladeenergie, die durch die Lade- und Entladesteuerungsvorrichtung empfangen wird, andauernd nicht kleiner als ein Ladeleistungsschwellenwert ist, Steuern, durch die Lade- und Entladesteuerungsvorrichtung, des Ladens der Energiespeicherbatterie unter Verwendung der elektrischen Ladeenergie.

15. Verfahren nach einem der Ansprüche 12 bis 14, wobei das Steuern, durch die Lade- und Entladesteuerungsvorrichtung, der Energiespeicherbatterie, um das Laden und Entladen zu stoppen, wenn der Batteriepegel nicht größer als ein Entladepegelschwellenwert ist und der Ladestrom der Energiespeicherbatterie kleiner als ein Ladestromschwellenwert ist, Folgendes umfasst:
in einem ersten Zeitraum, wenn der Batteriepegel andauernd nicht größer als der Entladepegelschwellenwert ist und der Ladestrom der Energiespeicherbatterie andauernd kleiner als der Ladestromschwellenwert ist, Steuern, durch die Lade- und Entladesteuerungsvorrichtung, der Energiespeicherbatterie, um das Laden und Entladen zu stoppen.

## Revendications

1. Système d'énergie, comprenant une batterie de stockage d'énergie et un appareil de commande de charge et de décharge, dans lequel l'appareil de commande de charge et de décharge est connecté à la batterie de stockage d'énergie, et l'appareil de commande de charge et de décharge est configuré pour :
obtenir un niveau de batterie de la batterie de stockage d'énergie, et obtenir un courant de charge de la batterie de stockage d'énergie ou un courant de décharge de la batterie de stockage d'énergie ;
lorsque le niveau de la batterie n'est pas supérieur à un seuil de niveau de décharge et que le courant de charge de la batterie de stockage d'énergie est inférieur à un seuil de courant de charge, commander la batterie de stockage d'énergie pour arrêter la charge et la décharge ; et
lorsque le niveau de la batterie n'est pas inférieur à un seuil de niveau de charge et que le courant de décharge de la batterie de stockage d'énergie est inférieur à un seuil de courant de décharge, commander la batterie de stockage d'énergie pour arrêter la charge et la décharge.

2. Système d'énergie selon la revendication 1, dans lequel l'appareil de commande de charge et de décharge est également configuré pour :
lorsque le niveau de la batterie n'est pas supérieur au seuil de niveau de décharge et qu'une puissance de l'énergie électrique de charge reçue par l'appareil de commande de charge et
de décharge n'est pas inférieure à un seuil de puissance de charge, commander la charge de la batterie de stockage d'énergie à l'aide de l'énergie électrique de charge.

3. Système d'énergie selon la revendication 1, dans lequel l'appareil de commande de charge et de décharge est également configuré pour :
dans une deuxième période de temps, lorsque le niveau de la batterie n'est continuellement pas supérieur au seuil de niveau de décharge et qu'une puissance de l'énergie électrique de charge reçue par l'appareil de commande de charge et de décharge n'est continuellement pas inférieure à un seuil de puissance de charge, commander la charge de la batterie de stockage d'énergie à l'aide de l'énergie électrique de charge.

4. Système d'énergie selon la revendication 2 ou 3, dans lequel l'appareil de commande de charge et de décharge est également configuré pour se connecter à un réseau électrique de courant alternatif, et l'énergie électrique de charge comprend l'énergie électrique de courant alternatif reçue par l'appareil de commande de charge et de décharge depuis le réseau électrique de courant alternatif ; et
l'appareil de commande de charge et de décharge est spécifiquement configuré pour :
réaliser une conversion de courant alternatif en courant continu sur l'énergie électrique de charge reçue, pour obtenir de l'énergie électrique de charge de courant continu ; et
produire l'énergie électrique de charge de courant continu obtenue par conversion à la batterie de stockage d'énergie.

5. Système d'énergie selon la revendication 2 ou 3, dans lequel le système d'énergie comprend également un panneau photovoltaïque, le panneau photovoltaïque est connecté à l'appareil de commande de charge et de décharge, et le panneau photovoltaïque est configuré pour convertir l'énergie photonique reçue en énergie électrique photovoltaïque de courant continu ; et l'appareil de commande de charge et de décharge est spécifiquement configuré pour :
réaliser une conversion de courant continu en courant alternatif sur une partie de l'énergie électrique photovoltaïque produite par le panneau photovoltaïque, produire de l'énergie électrique de courant alternatif obtenue par conversion à un réseau électrique de courant alternatif, et produire une autre partie de l'énergie électrique photovoltaïque produite par le panneau photovoltaïque, à la batterie de stockage d'énergie comme l'énergie électrique de charge.

6. Système d'énergie selon la revendication 2 ou 3, dans lequel le système d'énergie comprend également un panneau photovoltaïque, le panneau photovoltaïque est configuré pour convertir l'énergie photonique reçue en énergie électrique photovoltaïque de courant continu, et l'énergie électrique de charge comprend une partie ou la totalité de l'énergie électrique photovoltaïque produite par le panneau photovoltaïque ; et/ou
le système d'énergie comprend également un onduleur photovoltaïque, dans lequel l'onduleur photovoltaïque est configuré pour convertir l'énergie électrique de courant alternatif reçue depuis un réseau électrique de courant alternatif en énergie électrique de courant continu du réseau électrique, et l'énergie électrique de charge comprend l'énergie électrique du réseau électrique ; et
l'appareil de commande de charge et de décharge est spécifiquement configuré pour :
réaliser une conversion de courant continu en courant continu sur l'énergie électrique de charge, de sorte qu'une tension de l'énergie électrique de charge convertie s'adapte à la batterie de stockage d'énergie ; et
produire l'énergie électrique de charge convertie à la batterie de stockage d'énergie.

7. Système d'énergie selon l'une quelconque des revendications 1 à 6, dans lequel l'appareil de commande de charge et de décharge est spécifiquement configuré pour :
dans une première période de temps, lorsque le niveau de la batterie n'est continuellement pas supérieur à un seuil de niveau de décharge et que le courant de charge de la batterie de stockage d'énergie est continuellement inférieur à un seuil de courant de charge, commander la batterie de stockage d'énergie pour arrêter la charge et la décharge.

8. Système d'énergie selon l'une quelconque des revendications 1 à 7, dans lequel l'appareil de commande de charge et de décharge est également configuré pour :
lorsque le niveau de la batterie n'est pas inférieur au seuil de niveau de charge et qu'une puissance de l'énergie électrique de la batterie n'est pas inférieure à un seuil de puissance de décharge, commander la décharge de la batterie de stockage d'énergie.

9. Système d'énergie selon l'une quelconque des revendications 1 à 7, dans lequel l'appareil de commande de charge et de décharge est également configuré pour :
dans une troisième période de temps, lorsque le niveau de la batterie n'est continuellement pas inférieur au seuil de niveau de charge et qu'une puissance de l'énergie électrique de la batterie n'est continuellement pas inférieure à un seuil de puissance de décharge, commander la décharge de la batterie de stockage d'énergie.

10. Système d'énergie selon la revendication 8 ou 9, dans lequel le système d'énergie comprend également le panneau photovoltaïque et l'onduleur photovoltaïque, et l'onduleur photovoltaïque est connecté au panneau photovoltaïque et à l'appareil de commande de charge et de décharge séparément ;
le panneau photovoltaïque est configuré pour convertir l'énergie photonique reçue en énergie électrique photovoltaïque de courant continu ;
l'appareil de commande de charge et de décharge est spécifiquement configuré pour :
lorsque la puissance de l'énergie électrique photovoltaïque est inférieure à une puissance cible du réseau électrique de courant alternatif, réaliser une conversion de courant continu en courant continu sur l'énergie électrique de la batterie reçue, de sorte que l'énergie électrique de la batterie convertie s'adapte à l'onduleur photovoltaïque, dans lequel la puissance de l'énergie électrique de la batterie est égale à une différence obtenue en soustrayant la puissance de l'énergie électrique photovoltaïque de la puissance cible ; et
l'onduleur photovoltaïque est configuré pour réaliser une conversion de courant continu en courant alternatif sur l'énergie électrique photovoltaïque reçue et/ou l'énergie électrique de la batterie, et pour produire de l'énergie électrique de courant alternatif obtenue par conversion au réseau électrique de courant alternatif.

11. Système d'énergie selon l'une quelconque des revendications 1 à 10, dans lequel l'appareil de commande de charge et de décharge est spécifiquement configuré pour :
dans une quatrième période de temps, lorsque le niveau de la batterie n'est continuellement pas inférieur au seuil de niveau de charge et que le courant de décharge de la batterie de stockage d'énergie est continuellement inférieur au seuil de courant de décharge, commander la batterie de stockage d'énergie pour arrêter la charge et la décharge.

12. Procédé de commande de charge et de décharge, appliqué à un appareil de commande de charge et de décharge pour commander la charge et la décharge d'une batterie de stockage d'énergie dans un système d'énergie, dans lequel le procédé comprend :
l'obtention, par l'appareil de commande de charge et de décharge, d'un niveau de batterie de la batterie de stockage d'énergie, et l'obtention d'un courant de charge de la batterie de stockage d'énergie ou d'un courant de décharge de la batterie de stockage d'énergie ;
lorsque le niveau de la batterie n'est pas supérieur à un seuil de niveau de décharge et que le courant de charge de la batterie de stockage d'énergie est inférieur à un seuil de courant de charge, la commande, par l'appareil de commande de charge et de décharge, de la batterie de stockage d'énergie pour arrêter la charge et la décharge ; et
lorsque le niveau de la batterie n'est pas inférieur à un seuil de niveau de charge et que le courant de décharge de la batterie de stockage d'énergie est inférieur à un seuil de courant de décharge, la commande, par l'appareil de commande de charge et
de décharge, de la batterie de stockage d'énergie pour arrêter la charge et la décharge.

13. Procédé selon la revendication 12, dans lequel après la commande, par l'appareil de commande de charge et de décharge, de la batterie de stockage d'énergie pour arrêter la charge et la décharge lorsque le niveau de la batterie n'est pas supérieur à un seuil de niveau de décharge et que le courant de charge de la batterie de stockage d'énergie est inférieur à un seuil de courant de charge, le procédé comprend également :
lorsque le niveau de la batterie n'est pas supérieur au seuil de niveau de décharge et qu'une puissance de l'énergie électrique de charge reçue par l'appareil de commande de charge et
de décharge n'est pas inférieure à un seuil de puissance de charge, la commande, par l'appareil de commande de charge et de décharge, de la charge de la batterie de stockage d'énergie à l'aide de l'énergie électrique de charge.

14. Procédé selon la revendication 12, dans lequel après la commande, par l'appareil de commande de charge et de décharge, de la batterie de stockage d'énergie pour arrêter la charge et la décharge lorsque le niveau de la batterie n'est pas supérieur à un seuil de niveau de décharge et que le courant de charge de la batterie de stockage d'énergie est inférieur à un seuil de courant de charge, le procédé comprend également :
dans une deuxième période de temps, lorsque le niveau de la batterie n'est continuellement pas supérieur au seuil de niveau de décharge et qu'une puissance de l'énergie électrique de charge reçue par l'appareil de commande de charge et de décharge n'est continuellement pas inférieure à un seuil de puissance de charge, la commande, par l'appareil de commande de charge et de décharge, de la charge de la batterie de stockage d'énergie à l'aide de l'énergie électrique de charge.

15. Procédé selon l'une quelconque des revendications 12 à 14, dans lequel la commande, par l'appareil de commande de charge et de décharge, de la batterie de stockage d'énergie pour arrêter la charge et la décharge lorsque le niveau de la batterie n'est pas supérieur à un seuil de niveau de décharge et que le courant de charge de la batterie de stockage d'énergie est inférieur à un seuil de courant de charge comprend :
dans une première période de temps, lorsque le niveau de la batterie n'est continuellement pas supérieur à un seuil de niveau de décharge et que le courant de charge de la batterie de stockage d'énergie est continuellement inférieur à un seuil de courant de charge, la commande, par l'appareil de commande de charge et de décharge, de la batterie de stockage d'énergie pour arrêter la charge et la décharge.
